# EUROPEAN PATENT APPLICATION

(11) **EP 4 530 244 A1**
(43) Date of publication of application: **02.04.2025**
(21) Application number: 23200903.5
(22) Date of filing: 29.09.2023
(51) Int. Cl.: B66C 19/00, B62D 55/075, B62D 55/26, B65G 1/04

(54) **CEILING SUSPENSION ARRANGEMENT FOR LIFTING, TRANSFERRING AND LOWERING CONTAINERS, METHOD FOR OPERATING THE CEILING SUSPENSION ARRANGEMENT, AND CONTAINER PORT EQUIPPED WITH THE CEILING SUSPENSION ARRANGEMENT**

(71) Applicant: Ceilix AG, 82049 Pullach i. Isartal (DE)
(72) Inventor: Siedel, Michael Torsten, 53902 Bad Münstereifel (DE)
(74) Representative: Jostarndt Patentanwalts-AG

(57) **Abstract**

The invention relates to a ceiling suspension arrangement (100) for lifting, transferring and lowering containers comprising at least one crawler type ceiling unit (10) and a ceiling structure (1) extending in at least two spatial directions (x, y), wherein the ceiling structure comprises a plurality of profile units (1.1) extending in a first spatial direction, wherein the ceiling structure defines in at least an area at least one structural regularity (1a) wherein the crawler type ceiling unit is being configured to be moved in said first spatial direction (x) irrespective of momentary motion in said second spatial direction (y); and wherein the at least one ceiling unit comprises at least one hoist unit (50), wherein the at least one hoist unit comprises a gripping unit (53), wherein the gripping unit is configured to connect and/or to be connected to at least one container (60). The invention further relates to a port containing the ceiling suspension arrangement.

## Description

The present invention relates to ceiling suspension arrangements for lifting, transferring and lowering containers comprising at least one ceiling unit and a ceiling structure. In particular, the present invention refers to devices and methods according to features of the enclosed independent and dependent claims.

### BACKGROUND OF THE INVENTION

In prior art, multiple container lifting, transferring and lowering systems have been developed.

These systems are usually crane-based and employ so-called gantry cranes, wherein the gantry is supported by sturdy legs or columns, which are equipped with wheels (rubber-tired gantry crane) or tracks to move along rails. A trolley travels perpendicular to the main moving direction of the gantry crane along the length of the gantry beam.

In container train terminals, gantry cranes are positioned perpendicular to the container trains tracks (rails), whereas in maritime container ports gantry cranes are especially positioned alongside the wharf to off-/load container ships.

Advancements have been achieved in the realm of container hoisting and transfer operations, leading to enhancements in the efficiency of both container loading and unloading processes. The advancements in container handling efficiency primarily address the loading, transferring and offloading cycle times.

However, there are limitations to these advancements, e.g. to the speed and lifting capacity of the gantry cranes. Downtime for maintenance can disrupt container handling schedules. There is a need for more efficient container offloading and transferring processes to minimize port congestion, reduce turnaround times and enhance overall logistics efficiency.

The European patent application EP3705409 A1 describes an androgynous coupling means with great ease of use, high security and high fidelity. Furthermore, this androgynous coupling means may also comprise any efforts or measures for providing androgynous couplings such that the coupling procedure can be carried out with great reliability irrespective of any preload or position tolerance. In particular, this androgynous coupling means may be provided in the configuration of a connector and is configured for connecting energy lines or flow lines and/or for connecting information lines or flows and/or for connecting fluid lines or flows like gas flow, especially for thermally and/or electrically connecting these lines or flows.

The European patent EP3803727B1 describes a method for providing process protocols for a number of physical objects (O) passing through a plurality of production/processing stations (P1... Pn) in a production/processing line, wherein machine-readable data (D) are assigned to at least one object (O), wherein the data comprise at least one identifier by means of which the relevant object can be uniquely identified, wherein the process protocol is continuously generated by continuous addition.

### SUMMARY OF THE INVENTION

It is an object of the present invention to provide for a system, which is configured to lift, transfer and lower containers and which allows for reliable and accurate suspension/positioning/travelling of at least one ceiling unit at a ceiling structure that can be built in a time-efficient manner, especially for realizing variable two-dimensional tracks of motion of the unit. In particular, the object also includes providing for a suspension mechanism resp. suspension means allowing for securely suspending the ceiling unit and a hoisting mechanism resp. hoisting means allowing for securely gripping, lifting und lowering containers. In particular, the object may also include a provision of an appropriate system or concept for reliably coupling one or a plurality of ceiling units with the ceiling structure, planning trajectories of one or a plurality of ceiling units, employing a collision avoidance strategy, and also ensuring reliable positioning or even predefined paths of motion.

The present invention solves this problem by providing a ceiling suspension arrangement comprising the features of independent claim 1. Advantageous embodiments of the device are derived from dependent claims 2 to 12. Furthermore, the problem is solved by a container port according to claim 13, and methods according to claim 14 and 15. If not explicitly excluded, the teachings of the dependent claims can be combined arbitrarily with the teachings of the main claims and the subclaims.

According to a first aspect, the present invention provides for a ceiling suspension arrangement for lifting, transferring and lowering containers comprising at least one crawler type ceiling unit and a ceiling structure extending in at least two spatial directions, wherein the ceiling structure comprises a plurality of profile units (especially rails) extending (preferably continuously, especially without any structural discontinuity) in a first spatial direction, wherein the ceiling structure defines in at least an area at least one structural regularity in a second spatial direction (thereby providing a one-dimensional raster with discrete coupling points distributed in at least one equidistant regularity in said second spatial direction); and wherein the at least one crawler type ceiling unit comprises a plurality of suspension elements configured for suspending the at least one crawler type ceiling unit and configured for coupling the at least one crawler type ceiling unit to the ceiling structure by means of de-/coupling kinematics during a motion of the at least one crawler type ceiling unit in said second spatial direction, particularly depending on a relative motion of the at least one crawler type ceiling unit with respect to the ceiling structure in at least said second spatial direction, especially with the crawler type ceiling unit being configured to be moved in said first spatial direction along the profile units irrespective of momentary motion in said second spatial direction; and wherein the at least one ceiling unit comprises at least one hoist unit, wherein the at least one hoist unit comprises a gripping unit, wherein the gripping unit is configured to connect and/or to be connected to at least one container. Thereby, the present invention is configured for at least two-dimensional arbitrary motion in arbitrary directions defined by said at least two spatial direction and also provides for practical scalability (both with respect to the structure and with respect to the number of ceiling units), even in three-dimensional extension, if desired. The crawler type ceiling unit can exhibit at least one motor/actuator for actively driving the crawler type ceiling unit along the structure.

The crawler type ceiling unit follows an intended direction resp. an intended path of motion, especially in conjunction with appropriate sensor-actor-arrangements.

The characteristic, that the suspension arrangement is configured for active motion of the ceiling unit / the ceiling units includes all embodiments wherein the ceiling unit/s can move on its/their own. According to the present disclosure, "actively moving" designates a motion of the ceiling unit in relation to the structure actuated preferably by an electric motor of the ceiling unit connected to a drive unit such that the ceiling unit can move on its own inside the structure when the motor is activated. The choice of an appropriate motor can be carried out by the person skilled in the art in regard to existing motors and motor arrangements depending on the respective application / task / size of the respective crawler type ceiling unit.

In the context of the present invention, different types of containers may be understood as a container, such as a shipping container and an exchangeable container. Preferably it is a robust container designed to endure the rigor of transportation, storage and handling. These containers encompass a wide variety, ranging from durable steel containers commonly employed in intermodal shipping to specialized units tailored for the secure transport of sensitive and high-value cargo, including hazardous materials, electronics, pharmaceuticals, and even temperature-sensitive goods like fresh produce. Such specialized units include refrigerated containers, so-called reefers, tank containers for the transport of liquids, gases and powders.

While ISO containers follow dimensions and specifications set by the International Organization for Standardization, other types of containers can be handled according to the presented invention too, especially lifted and/or transported, e.g. airfreight-containers or vehicle transport containers might be modified. They can be customized in size and features to accommodate different types and quantities of items to be transported, e.g. goods objects or cars. Car transport containers are specially designed to facilitate the efficient and secure shipping of automobiles, motorcycles, and other cars. Unlike standard ISO containers, which are generalized for various types of cargo, car transport containers are tailored to address the specific needs and challenges associated with transporting cars.

Car transport containers often feature integrated loading ramps, wheel chocks, and tie-down points to secure cars during transit, minimizing movement and potential damage. The interior is often customized to protect the car's finish, with features like padded walls and floors.

Car transport containers are especially R-Rack or RORO (Roll On Roll Off) containers. R-Rack is a collapsible and stackable container, whereas RORO refers to ships designed to carry wheeled cargo that are driven on and off the ship on their own wheels or using a platform vehicle.

To procure the containers, a logistics expert would need to consider the specific requirements of the containers and the items being transported in the containers, including size, weight, and quantity, the containers meet the necessary safety and quality standards.

Within the realm of international shipping and trade, the term container can be understood as an intermodal freight container. This type of container is purposefully engineered for seamless transition between different modes of transport without the need for unloading and reloading of the container itself. Essentially, intermodal freight containers serve as reusable transport and storage units, facilitating the movement of goods and raw materials between various locations or countries. The present disclosure particularly refers to containers, which (partly) comply with ISO standards and are, therefore, called ISO containers.

Shipping containers can go through a transportation chain over land and water with or without the transfer of individual units in ports or train stations. These containers have preferably sturdy frame, solid walls, and waterproof doors, allowing them to be stacked in more than five layers and tightly packed in stacks of more than 20 containers side by side. These stacks are usually secured for sea transport using lashings. Shipping containers are commonly configured such that six, often nine or more, fully loaded containers can be stacked on top of each other. For the sea transport, the ship's movements, i.e. the lateral and longitudinal acceleration must be considered. Additional factors such as wind and wave impact must be considered depending on whether the cargo is stored in the hold or on deck of the container ship. Therefore, it is common that the containers on deck are secured with so-called twist locks and lashing rods / tensioners, while in the hold, the containers are typically secured with cell guides. Spacer pieces, the so-called twist stackers, can be used between containers to prevent them from shifting.

For the dis-/connecting processes these containers are usually equipped with (standardized) corner castings, which enable a connection between containers and hoisting gear via twistlocks. These is a fastener, which is inserted into a corner casting of a container. Then, a part of the twistlock is rotated by 90°, creating a form-fit connection. For example, in the case of an ISO container, each of its eight corners has a corner casting for hoisting, stacking and securing, whereas a vessel of a tank container is arranged in the middle of a steel frame, which itself is equipped with corner castings. Various corner castings arrangements and corner castings shapes for hooks, shackles and other connecting means are possible.

Furthermore, alternative container securing mechanisms are possible such as androgynous coupling via actuating a motor and gearing mechanism or connecting via pad eyes or lifting lugs.

According to the present disclosure, when it is referred to "ceiling structure", a structure which may also extend (at least in parts) on the ground or along a wall or on an inclined plane (or the like) can be designated. The present invention can preferably be applied for ceiling units (resp. units) being arranged at resp. traveling along a ceiling structure, and in addition, the present invention also allows for any motion along any structure with alternative orientation and/or arrangement.

Thus, in this context, referring to a "structure" or "ceiling structure" includes reference to any "structure" exhibiting the features presently described allowing for coupling with/to the inventive ceiling unit and corresponding de-/coupling kinematics.

According to the present disclosure, when it is referred to "ceiling unit" or "ceiling ceiling unit", the disclosure also generally refers to units or ceiling units and its relative spatial arrangement or traveling motion (e.g. also on the ground or on an inclined plane or at the wall).

According to the present disclosure, when it is referred to "profile units" or "profiles" or "T-profiles", the disclosure also generally refers to different kinds of profiles like e.g. I-profiles or L-profiles which may provide for advantageous/favorable arrangements in individual applications. The profile units can respectively exhibit at least one tread, wherein each suspension element exhibits at least one element of motion (for gliding or rolling, especially at least one wheel) arranged and configured for moving (especially gliding or rolling) the ceiling unit in said first spatial direction.

According to the present disclosure, when it is referred to "hoist unit", the disclosure generally refers to the functional unity, which is configured to connect to and to lift, hold and lower the container(s) during a stop of the corresponding ceiling unit and/or movement of the corresponding ceiling unit in at least said first spatial direction. This functional unity can comprise a drive unit, gripping unit, hoisting mechanism, connecting means for connecting the gripping unit to the container(s).

According to the present disclosure, when it is referred to "gripping unit", the disclosure generally refers to a unit, which is connected to a container via corresponding connecting means. For example, the gripping unit can be a spreader, which is lowered on top of a container to connect to the container. It can be equipped with telescopic arms, which enables the handling of different container types or enhances the connecting process of the gripping unit to the container. Alternatively, the gripping unit can comprise the connecting means to the container when the gripping unit, for example, comprises a coupling section, which is complementary to a coupling section, which the container is equipped with (e.g. androgynous coupling).

The hoisting mechanism (i.e., traction mechanism) can comprise hoisting gear, a cable drum, chains, wires and wire slings.

According to one embodiment, the crawler type ceiling unit comprises at least two circumferential tracks (especially tracks based on or defined by traction means, preferably chain-based tracks), wherein the suspension elements are attached to the circumferential tracks at predefined longitudinal positions corresponding to the structural regularity, wherein the circumferential tracks respectively define a specific path of circumferential motion of the respective suspension elements (resp. of coupling means of the suspension elements, especially of a free end of the respective suspension element), thereby providing de-/coupling kinematics during a motion of the crawler type ceiling unit in said second spatial direction. Such configuration not only facilitates implementation in context with complex structures or in context with a plurality of ceiling units to be used at the same time, but also considerably increases variability as to positioning.

According to the present disclosure, when it is referred to "circumferential track", the disclosure also generally refers to closed loop guidings and lines and predefined contours along which the suspension elements are guided and/or driven, e.g. chains or any such traction means providing for a closed loop.

The crawler type ceiling unit can be configured for enabling at least one closed loop trajectory of respective suspension elements along corresponding circumferential tracks, especially configured for enabling at least two closed loop trajectories of at least two subsets of respective suspension elements.

The circumferential tracks can be shaped in such a manner that the respective suspension elements are de-/coupled from/into the ceiling structure when passing a curved section of the tracks.

For example, a subset of the suspension elements can be attached to one of the circumferential tracks (resp. a subset of the first subset, momentary) and at least one further subset of the suspension elements are attached to a further one of the circumferential tracks (resp. a subset of the second subset, momentary) respectively at predefined first and second (further) longitudinal positions respectively corresponding to the structural regularity, in particular with each suspension element being guided by a pair of circumferential tracks.

The suspension elements can be fixedly attached/coupled by means of a first pulley to/with a/the first circumferential track and are guided within a/the second circumferential track by means of a second pulley respectively, wherein the first and second pulley preferably are arranged at a lever arm of the respective suspension element. For example, each suspension element can exhibit a first pulley and a second pulley arranged in longitudinal distance with respect to the first pulley at a lever arm of the respective suspension element, wherein the suspension element is coupled to a/the first and a/the second circumferential tracks via the first and second pulleys. Preferably, each suspension element exhibits at least one wheel to roll on a tread of the profile unit and a further wheel to roll on a side of the tread of the profile unit to reduce potential slip.

A respective subset of said suspension elements can be connected to each other by means of longitudinal connecting elements, especially by chain elements, thereby forming a closed loop of interrelated suspension elements distanced to each other in a/the predefined structural regularity.

The respective circumferential track can exhibit a chain or is provided/defined by a chain forming a closed loop of interrelated chain elements.

The crawler type ceiling unit can be configured for lifting a/the respective suspension elements out of the structure in an unloaded state, especially such that both de-/coupling kinematics for a subset of momentarily unloaded suspension elements and suspension of the crawler type ceiling unit by a subset of momentarily loaded suspension elements can be ensured.

The crawler type ceiling unit can exhibit two or more kinds/types of suspension elements, wherein the different types of suspension elements are de-/coupled according to individual kinematics (especially in opposite directions/sides at the profile units, especially both in and opposite to the second spatial direction resp. travel direction of the crawler type ceiling unit), wherein a first subset of the suspension elements are attached to a first pair of circumferential tracks (resp. a subset of the first subset, momentary) and at least one further subset of the suspension elements are attached to a second pair of circumferential tracks (resp. a subset of the second subset, momentary) respectively at predefined first and second (further) longitudinal positions respectively corresponding to the structural regularity (resp. to the distance of the profile units defined by said structural regularity), wherein the first and second pairs of circumferential tracks provide for individual kinematics for the first and second subsets of suspension elements, especially such that the crawler type ceiling unit can be secured with respect to opposite sides/directions (of the second spatial direction) at the structure resp. at the profile units.

Each suspension element can be guided by a pair of circumferential tracks, wherein the crawler type ceiling unit exhibits at least three pairs of circumferential tracks each guiding a subset of the suspension elements, wherein said de-/coupling kinematics are predefined by said three pairs of circumferential tracks in such a manner that respective suspension elements (resp. a subset of the respective subset, momentary) simultaneously de-/couple both at a first side (resp. first longitudinal position) of a respective profile unit and at a second side (resp. second longitudinal position) of a respective profile unit, especially such that the crawler type ceiling unit is secured with respect to opposite sides/directions (of the second spatial direction) at the ceiling structure, especially with all suspension elements being guided in same circumferential direction, especially with all circumferential tracks being arranged in parallel to each other.

The profile units of the ceiling suspension arrangement can be arranged according to at least two different structural regularities (especially structural densities) respectively with respect to said second spatial direction (i.e., distributed according to at least two equidistant regularities), namely a first structural regularity defining a/the relative distance of the profile units matching with the relative (longitudinal) distance of the suspension elements attached at the tracks (with respect to each other), and a second structural regularity being a whole-number multiple of said first structural regularity (resp. of the relative longitudinal distance of the suspension elements attached at the tracks), wherein the number of momentarily engaging/coupling suspension elements preferably is at least two within a/the overlapping area of the second structural regularity, and wherein a/the area of the first structural regularity preferably has a first load-bearing capacity and the area of the second structural regularity has a second load-bearing capacity (especially smaller than the first load-bearing capacity).

The profile units of the ceiling suspension arrangement can spatially define at least two different allowable loads (according to at least two different/specific load-bearing capacities) in at least two spatial sections of the ceiling suspension arrangement along the ceiling (wherein the cross section remains identical, geometrically).

According to one embodiment, the at least one crawler type ceiling unit comprises:
- at least one first drive unit configured for circumferential motion and accommodating the at least two circumferential tracks, wherein the at least two circumferential tracks comprise at least a first circumferential track and a second circumferential track having a different circumferential shape/contour than the first circumferential track, wherein the at least one crawler type ceiling unit is configured for moving in said second spatial direction by decoupling a subset of the plurality of suspension elements from resp. coupling them into the ceiling structure when the suspension elements are guided along the two circumferential tracks by the circumferential motion,
- at least one second drive unit configured for enabling locomotion of the crawler type ceiling unit in at least said first spatial direction and said second spatial direction, wherein the at least one second drive unit is configured for locomotion of the crawler type ceiling unit in said first spatial direction providing for at least two-dimensional locomotion capability of the crawler type ceiling unit, wherein the respective suspension element exhibits at least one wheel, which is arranged and configured for being guided along the ceiling structure, especially on a wheel tread of a respective/corresponding profile unit of the ceiling structure,
- at least two individually controllable motors, wherein the at least one first drive unit and the at least one second drive unit is connected to at least one motor, and wherein the motors for the first drive unit(s) and the second drive unit(s) are different, providing for active two-dimensional traveling capability of the crawler type ceiling unit.

The first drive units of the crawler type ceiling unit can be scaled up in number; e.g., the crawler type ceiling unit exhibits three first drive units each being based on the same kinematic concept, but at least one of the drive units provides for mirror-inverted type/manner of de-/coupling kinematics.

The crawler type ceiling unit can for example comprise at least one holonomic wheel that is part of the second drive unit. This provides active motion in the first spatial direction defined by the structure via the second drive unit and the motor connected thereto. The holonomic wheel can be a wheel whose wheel tread consists of rollers whose axes of rotation are at an angle to the axis of rotation of the main wheel. The absolute angle between the axes can for example be any angle between 5 and 90 degrees, especially 45 degrees. This angle has to be regarded when controlling the at least two motors, since the movement of the first drive units and the second drive unit are not independent in the case that the angle of the rollers to the wheel is different than 90 degrees. An angle smaller than 90 degrees can result in advantageous configurations regarding the traction of the holonomic wheel with the profiles of the structure. In case the angle is smaller it is possible to place more rollers with the same diameter around the wheel, which enhances traction transmission and can compensate for gaps in the traction transmission of a single omniwheel. The holonomic wheel can also be disc shaped and comprise a plurality of equally distributed rollers around its circumference, such that it allows for traction control in the first spatial direction and is not affected by a motion in the second spatial direction. The angle between the rollers and the wheel can be 90 degrees. This allows for easier control of the configuration.

The crawler type ceiling unit can also comprise a holonomic wheel set consisting of at least two coaxially arranged holonomic wheels, wherein the wheel set is connected to the second drive unit. The holonomic wheels are preferably disc shaped and have a thickness that is half the width of the profiles of the structure, such that there is room for at least two holonomic wheels of the holonomic wheelset to interact with one profile (rail) of the structure. This configuration enhances the traction of the disc shaped holonomic wheels. Each of the coaxially arranged holonomic wheels can have a predefined offset in the azimuthal direction in respect to their adjacent holonomic wheels. It is preferred that if one holonomic wheel comprises n rollers, that are equally distributed around the circumference of the wheel, each wheel is offset by 180/n degrees with respect to its neighbors. This way, it can be ensured that there is always at least one wheel of the wheelset that is in contact with the profile of the ceiling structure and slip of the second drive unit is prevented.

The holonomic wheels can be connected to a return mechanism that applies a force to the holonomic wheel pressing them against the ceiling structure. This configuration enhances traction of the holonomic wheel on the profiles (rails) of the structure additionally.

According to one embodiment, the at least one crawler type ceiling unit comprises at least one (further) drive unit, wherein the at least one further drive unit is configured for at least one of the following functions:
- lifting, holding and/or lowering at least one container with the at least one hoist unit during a stop and/or movement of the at least one crawler type ceiling unit in at least said first spatial direction and/or said second spatial direction,
- connecting the at least one gripping unit of the at least one ceiling unit to the at least one container.

It is possible to connect the drive units of the ceiling units to a motor, especially to an electric motor. The drive unit may comprise different kinds of power units, motors, and actuators.

For a crawler type ceiling unit with at least one circumferential track, the crawler type ceiling unit can exhibit at least one drive interacting with (resp. driving) at least one of the circumferential tracks, wherein the ceiling suspension arrangement is configured for a predefinable locomotor motion of the crawler type ceiling unit at least in said second spatial direction (especially back and forth).

Generally, the ceiling unit can be provided as an active ceiling unit exhibiting at least two motors interacting with the movement mechanism resp. with the suspension elements. In particular, the ceiling unit exhibits at least one power unit or motor for each drive unit, e.g. an electric motor which is coupled to an axis of rotation of a gear unit interacting with the respective circumferential track or an electric motor interacting with the wheels of the suspension elements via the at least one second drive unit, in order to allow for motorized motion in at least two spatial directions, thus, the wheels can be driven by any drive to actively move along the profile units.

A drive unit can interact with the hoist unit for providing the functionality of the hoisting operation (i.e. lifting, holding and/or lowering at least one container) and/or the functionality of connecting the gripping unit to at least one container can be arranged at different positions of the ceiling unit, particularly the hoist unit, particularly at different heights.

The hoist unit can be fixed to and supported by the at least one first drive unit.

The crawler type ceiling unit can exhibit an energy storage unit providing energy to a/the at least one drive of the crawler type ceiling unit, especially to a/the at least one drive interacting with (resp. driving) at least one of the circumferential tracks.

The ceiling suspension arrangement, especially the ceiling structure, can exhibit or define at least one energy charging point/position, wherein the ceiling suspension arrangement is configured for charging the at least one crawler type ceiling unit with energy when being arranged in/at said energy charging point/position.

Also, the ceiling unit resp. the at least two drive units may comprise an energy storage unit, especially a rechargeable battery pack, providing energy to the at least two drive unit or motors, irrespective of any external energy supply (power to motors for moving the ceiling unit resp. the tracks resp. the guiding motion along the tracks).

The ceiling structure/s can comprise an electrical bus, preferably connected to the power grid. The ceiling suspension arrangement can exhibit a plurality of energy supply lines extending along at least a subset of the profile units, wherein at least a subset of the suspension elements of the respective crawler type ceiling unit are configured for energy extraction via the energy supply lines, e.g., by means of current collectors or power-sliders provided at a free end (resp. at elements of motion) of the respective suspension element coupling with the profile units. Of course, the usual (electrostatic) discharge considerations have to be taken into account.

According to one embodiment, the ceiling suspension arrangement comprises at least one sensing device comprising at least one sensor, wherein the at least one sensing device is configured to provide sensor data related to at least one of the following:
- motion of the at least one crawler type ceiling unit in said first spatial direction and/or second spatial direction,
- hoisting operation of the at least one hoist unit,
- gripping operation of the at least one gripping unit.

The ceiling suspension arrangement exhibits a sensing device exhibiting at least one sensor from the following group: speed sensor, distance sensor, position measuring sensor, force sensor, acceleration sensor resp. gyroscope; wherein the ceiling suspension arrangement is configured for controlling the at least one crawler type ceiling unit based on (depending on) momentary measuring data of the at least one sensor, especially for controlling an absolute or a relative position or state of motion of the at least one crawler type ceiling unit.

The ceiling suspension arrangement can exhibit a sensing device exhibiting at least one sensor from the following group: force sensor, acceleration sensor resp. gyroscope; wherein the ceiling suspension arrangement is configured for gravity offloading based on active force exertion in at least one spatial direction via the attachment point or hoist unit (especially active force vertically upwards), wherein the amount of force is depending on (resp. is adapted to) effective gravity and/or effective load (effective gravitational forces exerted at the attachment point or hoist unit) especially based on momentary data of the at least one force sensor, preferably with the amount of force being adjustable e.g. according to individual user commands.

According to one embodiment, the ceiling suspension arrangement comprises a tracking system, wherein the at least one crawler type ceiling unit and/or the ceiling structure comprises a tracking unit; and/or wherein the at least one crawler type ceiling unit comprises at least one sensor from the following group: speed sensor, distance sensor, position measuring sensor, force sensor, acceleration sensor.

The ceiling suspension arrangement can be configured for localizing individual ceiling units based on at least one locating signal transmitted by individual crawler type ceiling units (passively or actively, e.g., passively based on at least one individual transmitter, especially based on individual identification features).

Exemplarily, the ceiling suspension arrangement exhibits a plurality of crawler type ceiling units respectively exhibiting at least one sensor (position, distance, speed, acceleration) and a communicating unit communicating with a (central) control unit of the ceiling suspension arrangement, wherein the ceiling suspension arrangement is configured for predefining a plurality of individual paths of two-dimensional motion of respective crawler type ceiling units (especially such that each individual path of motion is adjusted resp. adapted to momentary moving conditions and positions of the further crawler type ceiling units, especially by providing individual commands to at least one drive or actuator of each crawler type ceiling unit, especially based on at least one individual identification feature, e.g. a code which is specific for each individual crawler type ceiling unit).

According to one embodiment, the ceiling suspension arrangement comprises at least one control unit, wherein the at least one control unit is characterized in at least one of the following, particularly based on corresponding sensor data:
- providing for trajectory planning and/or collision avoidance,
- computing actuator signals for the ceiling units, particularly to follow a predefined trajectory and/or to execute driven/driving motion according to a collision avoidance strategy,
- computing actuator signals for the gripping and hoisting motion of the at least one crawler type ceiling unit,
- comprising a wireless communication module to provide actuator signals to at least one crawler type ceiling unit.

Exemplarily, the ceiling suspension arrangement exhibits a central control unit monitoring at least the momentary positions of the (active) crawler type ceiling units of the ceiling suspension arrangement, wherein each crawler type ceiling unit exhibits a communicating unit for wireless transmission of control signals to at least one drive or actuator of the respective crawler type ceiling unit;
**or** wherein the ceiling suspension arrangement is configured for decentral control, wherein each crawler type ceiling unit exhibits a sensing device providing momentary sensor data (especially speed and/or distance and/or position and/or acceleration data) to at least one drive or actuator of the crawler type ceiling unit. It is also possible to combine a ceiling suspension arrangement with a central control unit with crawler type ceiling units exhibiting features for decentral control, such as sensing and communication devices for communicating with near/neighboring crawler type ceiling units in order to provide a particularly secure collision prevention. This allows for user interaction with some crawler type ceiling units while other crawler type ceiling units can move autonomously and still reliably avoid any collisions.

The ceiling suspension arrangement can exhibit at least one control unit configured for wireless control resp. wireless data transmission (especially based on at least one communicating unit, e.g. near filed, mobile network, LAN, LP-WAN, SigFox, NBIoT), wherein the ceiling suspension arrangement is configured for controlling the one- or two-dimensional movement or path of motion of a respective ceiling unit (especially in dependence on a desired/required target position, especially based on at least one identification feature of the respective ceiling unit or container wirelessly transmitted by the respective ceiling unit or wirelessly acquired by a/the control unit of the ceiling suspension arrangement) and/or of a subset of at least two of the ceiling units in dependence on each other, especially such that the plurality of ceiling units simultaneously move according to a plurality of individual one- or two-dimensional paths of motion.

According to one embodiment, the ceiling suspension arrangement comprises a supporting structure for the ceiling structure. The supporting structure can be a load bearing structure or a load transferring structure and/or can be connected to an additional load bearing structure. For this purpose, the ceiling structure can comprise ceiling modules, wherein the ceiling modules comprise a subset of profile units interconnected via connection beams, wherein the modularity simplifies building the ceiling structure and accelerates the building process of the ceiling structure.

According to one embodiment, the at least one hoist unit of the at least one crawler type ceiling unit is configured to lift, transfer and lower a container arrangement of at least two containers, wherein the at least two containers are arranged in a side-by-side and/or superimposed manner. These enhances the efficiency concerning container handling.

According to another embodiment, the ceiling suspension arrangement comprises at least two crawler type ceiling units, wherein at least two of the at least two crawler type ceiling units are configured to lift, transfer and lower a container or an arrangement of at least two containers, wherein the at least two containers are arranged in a side-by-side and/or superimposed manner, wherein the gripping units of the at least two of the at least two crawler type ceiling units connect to the container or the arrangement of the at least two containers at least at two different gripping points.

The ceiling suspension arrangement can be configured for controlling the one- or two-dimensional movement or path of motion of a subset of at least two of the crawler type ceiling units in dependence on each other, especially such that the ceiling units of the (respective) subset move analogously (especially remaining at the same distance with respect to each other), especially by also controlling at least two hoists of the (respective) subset carrying the same external load.

According to one embodiment, at least a part of the ceiling structure is arranged at a height, which is above the height of a container transport ceiling unit and/or container stack and/or freight-carrying ceiling unit such that the crawler type ceiling unit can arrange the containers in a stack (typically 25 to 35 meters) and/or the freight-carrying ceiling units (e.g. 18 to 22 meters) can maneuver under the ceiling structure.

According to one embodiment, the at least one gripping unit comprises a mechanism for connecting at least semi-autonomous to at least one container; and/or wherein the at least one hoist unit a connector unit for connecting the at least one gripping unit with the at least one container in an at least semi-autonomous manner. For example, the autonomous connecting mechanism can be realized via a robot arm or androgynous coupling with a motor actuating mechanism for connecting the gripping unit, which can be an androgynous coupling section in this case, to a container.

The above mentioned object is also solved by a container port comprising at least one ceiling suspension arrangement according to any preceding claim, wherein the at least one ceiling suspension arrangement is configured to load and/or unload at least one container transport ceiling unit and/or transfer containers to freight-carrying ceiling units and/or uninterruptedly transfer containers to a storage yard and/or uninterruptedly transfer at least one container from at least a first container transport ceiling unit to at least a second container transport ceiling unit.

The ceiling suspension arrangement can be installed in different parts of a container port. In particular, the system can be installed alongside a wharf or rail terminal or road terminal and serve the unloading and loading of corresponding container transport ceiling units. It can be further configured to transfer the containers to or from a storage yard position or to transfer the container to a freight-carrying ceiling unit, e.g. straddle carrier, side lift, reach stacker or container lorry, which itself moves the container away from the dock and to a storage yard. Further, the ceiling suspension arrangement can be installed in at least a section of an interim warehouse of the container port or at least in a section of a storage yard.

The ceiling structure of the ceiling suspension arrangement can partially or completely cover the container port, wherein at least parts of the ceiling structure (e.g. the waterside overhang) can be folded up, particularly into an almost vertical resting position (when not in use), to not obstruct vessel traffic in the harbor basin and to prevent collisions with the deck superstructures of arriving or departing container ships.

The container port may be a maritime container port, wherein the containers are transshipped between ships and land and/or different types of land ceiling units, including but not limited to trains, trucks and overland transport structures, and/or suspended transport systems and/or an inland container port, wherein the containers are transshipped between different land ceiling units, including but not limited to trains, trucks and overland transport structures. The transshipment of the containers may take place between the same type of ceiling unit. For example, a container may be transshipped from a large vessel, e.g. deep-sea vessel, to a smaller vessel, e.g. short-sea vessel. The container port may further incorporate means for different types of transshipment and comprise an interim warehouse or a storage yard, wherein the containers are stored temporarily.

The ceiling suspension arrangement combine different transfer methods. The containers can be partly moved to their storage position by the ceiling unit uninterruptedly, whereas other containers are transferred to freight-carrying ceiling units. In an exemplary embodiment, the system is arranged alongside a wharf, wherein the system serves to unload container transport vessels, and extends to a nearby (section of a) storage yard, wherein containers are stored, which will be loaded on another container transport vessel in a next step of their transshipment. Other containers, which are to be moved to more distant storage yard(s), which are not uninterruptedly connected, can be, therefore, transferred to freight-carrying ceiling units.

The different operations of the crawler type ceiling unit can be conducted/controlled manual, semi-autonomous or fully autonomous.

The above mentioned object is also solved by a method of container loading and unloading with a ceiling suspension arrangement according to the present invention, particularly in a container port according to the present invention, comprising at least one, particularly all, of the following steps:
- positioning of at least one crawler type ceiling unit at a predefined position,
- lowering at least one gripping unit of at least one hoist unit of at least one crawler type ceiling unit,
- connecting at least one gripping unit of at least one hoist unit of at least one crawler type ceiling unit to at least one container,
- lifting at least one container via at least one hoist unit of at least one crawler type ceiling unit,
- transferring at least one container via a motion of at least one crawler type ceiling unit in at least one spatial direction,
- lowering at least one container via at least one hoist unit of at least one crawler type ceiling unit.

The transferring of the at least one container can be carried out simultaneously to lowering or lifting the at least one container, i.e., a hoisting operation can be carried out simultaneously with movement along the ceiling structure.

The above mentioned object is also solved by a method of operating a ceiling suspension arrangement according to the present invention, particularly in a container port according to the present invention, comprising at least one of the following:
- monitoring a position and/or trajectory of at least one crawler type ceiling unit,
- trajectory planning, particularly with a collision avoidance strategy,
- computing actuator signals for at least one crawler type ceiling units to follow a predefined trajectory and/or to execute driven/driving motion according to a collision avoidance strategy,
- computing actuator signals for a gripping of at least one gripping unit and/or hoisting operation of at least one hoist unit of at least one crawler type ceiling unit, particularly with an overload protection mechanism,
- coordinating a motion of at least two crawler type ceiling units in at least one spatial direction, particularly via corresponding trajectory planning and/or collision avoidance strategy.

This can allow to manage the hoisting, transfer and positioning of containers and enables prevent accidents and ensure proper operation.

An overload protection mechanism can encompass emergency stops and alarms integrated into the crawler type ceiling unit to ensure safe operations and prevent accidents.

Further advantages, features, and advantageous refinements of the invention are derived from the dependent claims and the following description of preferred embodiments with reference to the figures.

### BRIEF DESCRIPTIONS OF THE DRAWINGS

In the accompanying drawings, various aspects of suspension arrangements according to the invention are discussed.

Of the figures show
- **Fig. 1a, 1b**: exemplary suspension elements for de-/coupling crawler type ceiling units with to/from structure;
- **Fig. 1c, 1d**: exemplary counter wheels for enhancing grip between crawler type ceiling units and a structure;
- **Fig. 2a-2n**: kinematic aspects and details of a crawler type according to an embodiment of the invention suspended on a structure;
- **Fig. 3a, 3b**: a drive unit (of the first kind) of a crawler type ceiling unit according to one embodiment of the invention;
- **Fig. 3c, 3d**: an exemplary counter wheel unit;
- **Fig. 3e, 3f**: a first arrangement of drive units (of the first kind) and a counter wheel unit;
- **Fig. 3g, 3h**: a second arrangement of drive units (of the first kind) and a counter wheel unit;
- **Fig. 3i**: a side view of a drive unit (of the first kind) and a counter wheel unit coupled into a structure;
- **Fig. 4a,** 4b: an arrangement of drive units (of the first kind) with counter wheel units with a motor (and a housing);
- **Fig. 4c**: a crawler type ceiling unit according to a first embodiment;
- **Fig. 4d**: a crawler type ceiling unit according to a second embodiment;
- **Fig. 4e, 4f**: the crawler type ceiling unit according to the second embodiment in side-views;
- **Fig. 5a-5b**: a suspension arrangement according to embodiments of the invention with conveyor/connector rails;
- **Fig. 6**: a suspension arrangement according to one embodiment with a conveyor/connector rail;
- **Fig. 7**: a suspension arrangement according to one embodiment with two structures and a conveyor/connector rail;
- **Fig. 8**: details of a crawler type ceiling unit driving along a conveyor/connector rail;
- **Fig. 9**: a suspension arrangement according to one embodiment with a conveyor/connector rail;
- **Fig. 10**: a suspension arrangement according to one embodiment with two structures connected via a conveyor/connector rail;
- **Fig. 11**: a detail of a crawler type ceiling unit driving along a conveyor/connector rail;
- **Fig. 12a, 12b**: a ceiling unit;
- **Fig. 13a, 13b**: a ceiling unit;
- **Figs. 14, 15, 16, 17**: parts of a ceiling suspension arrangement;
- **Fig. 18**: a ceiling suspension arrangement / container port.

### DETAILED DESCRIPTION OF THE DRAWINGS

The invention will now be described first in general for the inventive concept with reference to all drawings, before the drawings are described in detail.

The crawler type ceiling units are preferably crawler type ceiling units 10 which exhibit at least one first drive unit 11 which may provide for accommodation of a crawling or driving mechanism 11.1 with motor(s), which allows for circumferential motion of suspension elements 13 along circumferential tracks 12, namely simultaneously along a first and a second circumferential track 12a, 12b, which tracks exhibit individual shapes/contours XZa, XZb. Preferably, the tracks only extend two-dimensionally (2D), i.e., in a plane, and the shape is different at least in curved sections 12r of the tracks. Each track 12a, 12b exhibits a parallel/linear section 12p (resp. two parallel sections) and at least one redirection/curved section 12r (resp. two curved sections). A lateral area resp. surface shell of the at one chassis or housing is preferably flat, plane, even, respectively on each lateral side. Such a configuration is favorable in view of interconnection of several housings 17 (side by side).

The crawler type ceiling unit 10 exhibits at least one further housing 17 (preferably in the same drive unit 11) exhibiting first and second circumferential tracks 12a, 12b and accommodating a plurality of further suspension elements 13b which are arranged mirror-inverted, with respect to the suspension elements 13 of the first housing 17. Both types of suspension elements 13, 13b can be arranged within the same drive unit 11, and optionally, both types of suspension elements 13, 13b can be guided by the same pair of circumferential tracks 12a, 12b. The drive unit 11 may actively provide for a traveling motion (e.g., by a synchronous guiding/driving motion of/to the suspension elements 13, 13b). Several first drive units 11a, 11b, 11c can be interconnected, e.g., via cross-beams or the like. The desired/required traveling motion can be controlled via a control unit which can be coupled to at least one motor 11.5. A drive section may also comprise at least one gear unit 18 configured for interacting with the track(s) and at least one energy storage unit. A sensor arrangement exhibiting at least one sensing device, e.g., comprising position sensors and velocity sensors and/or weight sensors and/or gyroscopes, may provide sensor data to the control unit.

Preferably, each suspension element 13, 13a, 13b exhibits a first pulley 13.1 and a second pulley 13.2, and optionally, at least one wheel 13.3 is provided at the free end of the suspension element 13 (bearing point/coupling point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, optionally, a current collector resp. power-slider 13.4 (conductive slider for energy transfer) is provided in an arrangement geometrically corresponding to a/the power rail 1.3 of the respective profile unit 1.1. The plurality of suspension elements 13 of a/the respective first drive unit 11 can be interconnected via longitudinal connecting elements 15 which can ensure a closed loop 15a of interrelated suspension elements. The suspension elements 13 are coupled to the respective circumferential tracks.

In other words: The suspension elements preferably exhibit at least one wheel 13.3 performing a rolling motion on the profile units 1.1, preferably on the wheel tread 1.2 and preferably additionally on the side of the profile units, of the structure 1, allowing for a motion which is orthogonal to the motion predefined and evoked by the tracks 12, wherein the wheel 13.3 is positioned and aligned orthogonally with respect to the first and second pulleys 13.1, 13.2. Optionally, the wheel can be motorized e.g., by means of further actuators or motors. The first pulley 13.1 is engaged with the first or second circumferential track, thereby following the contour defined by said track; also, the second pulley 13.2 is engaged with the first or second circumferential track, thereby following said track (which is different from the track engaged by the first pulley, i.e., vice versa). The lever arm 13.5 is preferably L-shaped, especially provided as integral element in one piece (massive, solid).

The structure 1 and its raster 1a is defined by profile units 1.1 being arranged in parallel and with similar distance (pitch) to adjacent profile units 1.1. Each profile unit is preferably configured to support geometries/surface(s) which are adequate for interaction with the wheel(s) of the suspension elements (e.g. T-profile, C-profile, L-profile, I-profile), and a series of such profile units preferably provides for a planar surface at least in sections.

By means of the circumferential tracks 12a, 12b and the suspension elements 13, the (respective) first drive units 11, and the kinematics defined by the shape of the tracks provide for de-/coupling kinematics 20 which ensure both horizontal/vertical motion kinematics and non-circular pivot motion kinematics. Thereby, de-/coupling of each suspension element can be affected via circumferential motion along the tracks without the need of any axial telescopic motion within each suspension element, i.e., the respective suspension element can be designed as purely mechanic unit.

In the following, the kinematics provided by the guiding/driving motion along circumferential tracks is described in general, first:
The first pulley 13.1 of each suspension element 13 rotates about a first pulley axis and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis (which is preferably aligned in parallel) and defines a second guiding point G13.2 (coupling the second track and the respective suspension element). When referring to the kinematics of each suspension element, an instantaneous center of rotation of each suspension element is defined by the axis of the first pulley 13.1 being coupled to the first track 12a, wherein coupling/attachment/fixation can be ensured e.g. at the axial section between a/the suspension arm 13.6 and the first pulley 13.1. The two tracks 12a, 12b are arranged with respect to another in such a manner that the contacting/bearing point/area P13 (coupling point) of the respective suspension element 13 can be hooked or hitched in the structure. The wheel 13.3 of each suspension element rotates about a wheel axis which is preferably aligned orthogonally to the first and second pulley axis. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the corresponding tracks (of a pair of tracks guiding the respective suspension element).

The crawler type ceiling unit 10 may exhibit a control unit which can be a decentral (individual) control unit. Further, a respective crawler type ceiling unit 10 may exhibit a communicating unit (e.g., near field, mobile network, LAN, LP-WAN, SigFox, NBIoT) and/or a transmitter (active or passive), especially for transmitting locating signals. These components are configured to interact in/with a positioning system or route-planning tool.

The crawler type ceiling unit 10 can be configured to carry a container 60 via a hoist unit 50 in combination with a gripping unit 53, which can be attached to the crawler type ceiling unit 10 at a connecting point P60. The load may comprise an identification feature, especially a code (e.g., including a number). Likewise, each crawler type ceiling unit 10 may comprise an identification feature, especially a code (e.g., including a number).

A digital twin referring to a respective crawler type ceiling unit 10 and/or a digital twin referring to a respective container 60 can be stored in a database of a route-planning tool. The database is configured for storing and accessing the at least one digital twin at least comprising information of momentary status, wherein the suspension arrangement is configured to define at least one control parameter for individual crawler type ceiling units based on information of the at least one digital twin.

In the figures, (x) designates a/the first spatial direction (especially cross direction, especially direction of longitudinal extension of profile units), and (y) designates a/the second spatial direction (especially longitudinal direction or momentary driving direction of the crawler type ceiling unit), and (z) designates a/the third spatial direction.

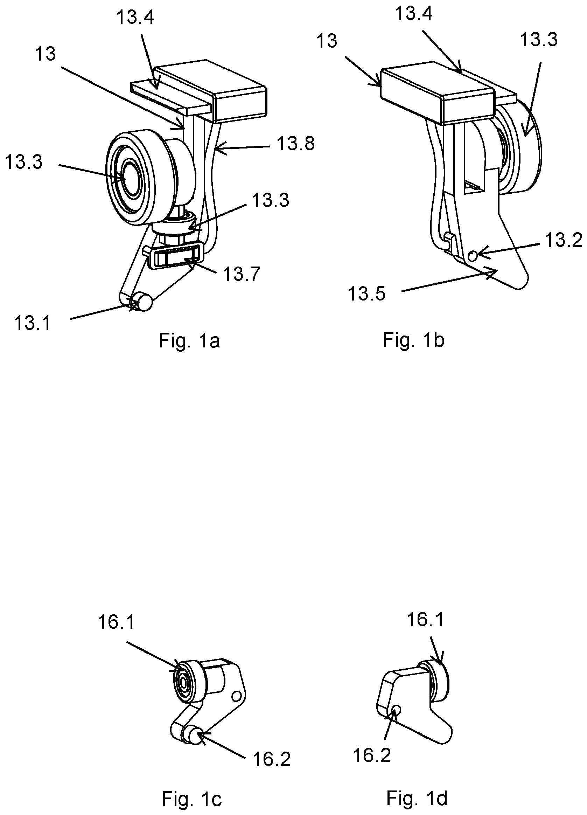

In **Fig. 1a** and **1b****,** a suspension element 13 is shown in an isolated view from a "front" and "back" side. A first pulley 13.1 intended to be pulled along a circumferential track 12, 12b is shown. The suspension element 13 exhibits two elements of motion 13.3, a first wheel to roll on a wheel tread 1.2 of a profile unit 1.1, and a second wheel to roll on a side of the wheel tread 1.2. Additionally, the suspension element 13 exhibits a first electrical contact ("current collector") 13.4 to connect to a power line 1.3 integrated into the structure 1 and a second electrical contact 13.7 electrically connected to the first electrical contact 13.4 via a wire 13.8 to provide power to an internal bus of a crawler type ceiling unit 10.

**Fig. 1c** and **1d** show wheels 16.1 of a counter mechanism 16, wherein the wheels 16.1 push on a "bottom" side of a profile unit 1.1 further enhancing force fit coupling between the crawler type ceiling unit 10 and the structure 1. Similar to the suspension elements 13, the counter wheels 16.1 exhibit pulleys 16.2 intended to be pulled via a chain/belt 16a and guided along a circumferential track to follow a predefined path of motion. Preferably, a crawler type ceiling unit 10 exhibits at least one first set of suspension elements 13 with a first orientation, at least one second set of suspension elements of suspension elements 13b facing in opposite direction (mirror-inverted) and at least one set of counter wheels 16, such that a "T"-shaped profile unit can be clamped between the wheels from all (six) sides, i.e., both sides (top and bottom) of the wheel tread as well as a side of the wheel tread. "Top" and "bottom" in this case are the sides facing away from the crawler type ceiling unit and towards the ceiling unit respectively and do not limit the crawler to be used in a ceiling arrangement. The clamping of the profile unit (preferably from all sides) allows ceiling units to switch between structures exhibiting different orientations (e.g., being arranged at a wall, a ceiling, the floor).

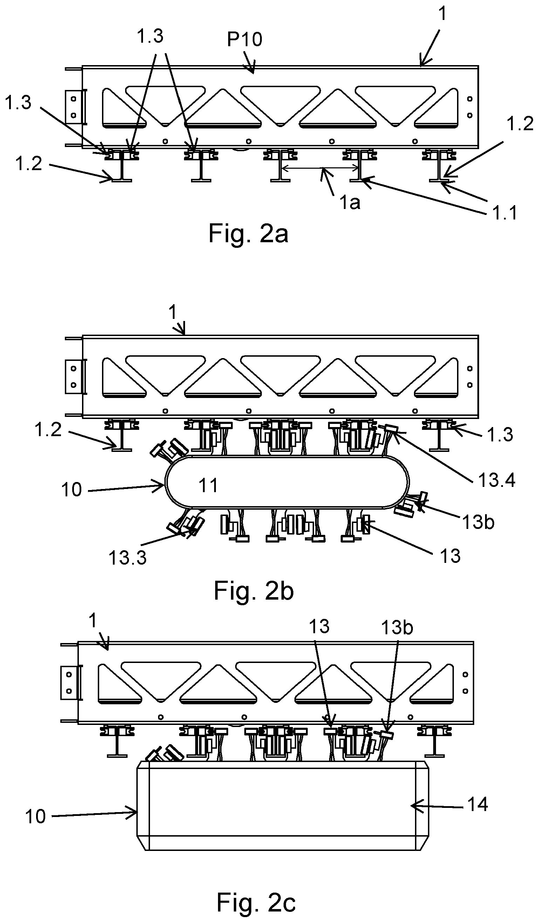

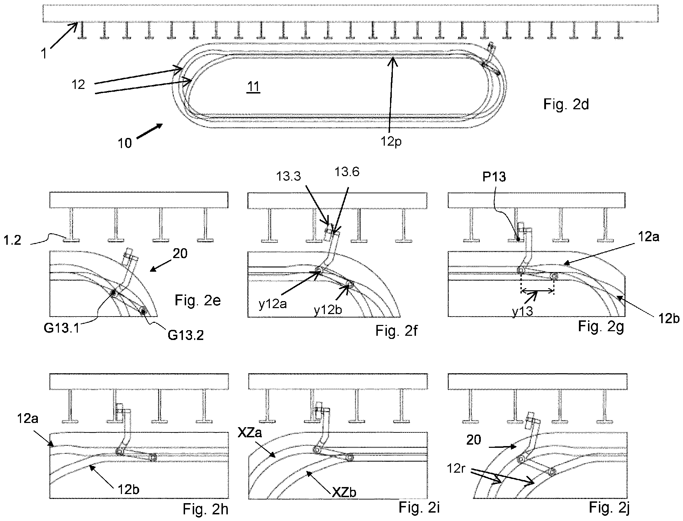

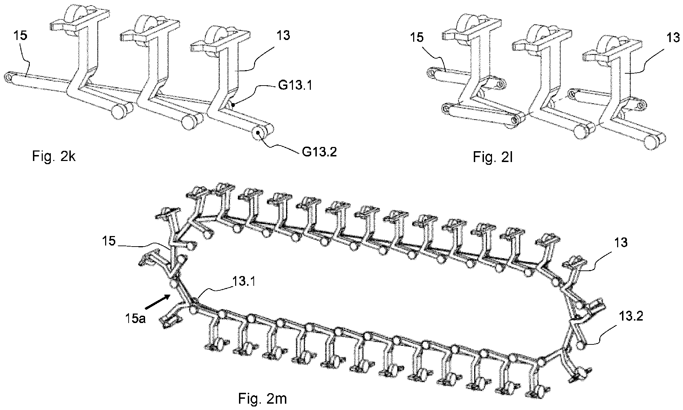

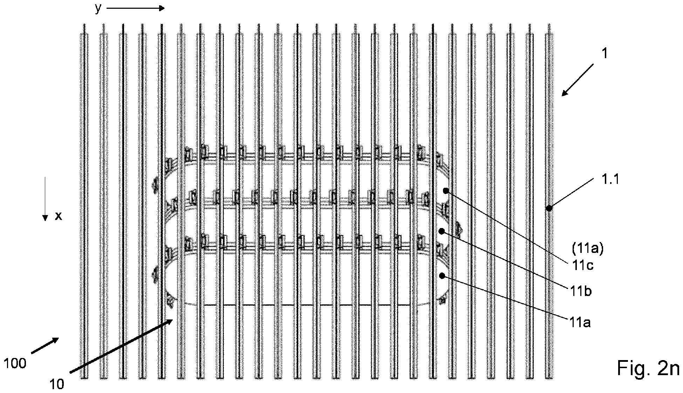

In conjunction with appropriate sensor-actor-arrangements, not shown here, the crawler type ceiling unit 10 can follow an intended direction resp. an intended path of motion in the structure shown in **Fig. 2****.** **Fig. 2a** shows a cross-section of an energy charging area P10. The profile units 1.1 respectively exhibit treads 1.2, wherein suspension elements 13 exhibit at least one wheel 13.3 for gliding or rolling, arranged and configured for moving the crawler type ceiling unit 10 in the first spatial direction (x). The crawler type ceiling unit 10 enables two closed loop trajectories of at least two subsets of respective suspension elements, as can be seen in **Fig. 2d****-j.** The circumferential tracks 12, 12a, 12b are shaped in such a manner that the respective suspension elements 13 are de-/coupled from/into the structure 1 when passing a curved section 12r of the tracks 12a, 12b. One subset of the suspension elements 13 is attached to one of the circumferential tracks (resp. a subset of the first subset, momentary) and one further subset of the suspension elements 13 are attached to a further one of the circumferential tracks (resp. a subset of the second subset, momentary) respectively at predefined first and second (further) longitudinal positions respectively corresponding to the structural regularity 1a, with each suspension element being guided by a pair of circumferential tracks. The suspension elements 13 are fixedly attached/coupled by means of a first pulley 13.1 to/with a/the first circumferential track 12a and are guided within a/the second circumferential track 12b by means of a second pulley 13.2 respectively, wherein the first pulley 13.1 and the second pulley 13.2 are arranged at a lever arm 13.5 of the respective suspension element 13. A respective subset of said suspension elements 13 is connected to each other by means of longitudinal connecting elements 15 (chain elements) forming a closed loop of interrelated suspension elements 15a distanced to each other in the predefined structural regularity 1a, as can be seen in **Fig. 2k** **- m.** The crawler type ceiling unit 10 in **Fig. 2b** exhibits two kinds/types of suspension elements 13a, 13b, wherein the different types of suspension elements 13 are de-/coupled according to individual kinematics (here, in opposite directions/sides at the profile units 1.1, both in and opposite to the second spatial direction (y) resp. travel direction of the crawler type ceiling unit 10), wherein a first subset of the suspension elements 13a are attached to a first pair of circumferential tracks 12a, 12b (resp. a subset of the first subset, momentary) and at least one further subset of the suspension elements 13b are attached to a second pair of circumferential tracks 12a, 12b (resp. a subset of the second subset, momentary) respectively at predefined first and second (further) longitudinal positions y12a, y12b respectively corresponding to the structural regularity 1a (resp. to the distance of the profile units defined by said structural regularity), wherein the first and second pairs of circumferential tracks 12a, 12b provide for individual kinematics for the first and second subsets of suspension elements 13a, 13b, especially such that the crawler type ceiling unit 10 can be secured with respect to opposite sides/directions (of the second spatial direction) at the structure 1 resp. at the profile units 1.1.

In **Fig. 2n****,** each suspension element 13, 13b is guided by a pair of circumferential tracks 12a, 12b, wherein the crawler type ceiling unit 10 exhibits at least three pairs of circumferential tracks 12a, 12b, each guiding a subset of the suspension elements 13, 13b, wherein said de-/coupling kinematics are predefined by said three pairs of circumferential tracks 12a, 12b in such a manner that respective suspension elements 13a, 13b (resp. a subset of the respective subset, momentary) simultaneously de-/couple both at a first side (resp. first longitudinal position) of a respective profile unit 1.1 and at a second side (resp. second longitudinal position) of a respective profile unit 1.1, especially such that the crawler type ceiling unit 10 is secured with respect to opposite sides/directions (of the second spatial direction) at the structure 1 with all suspension elements 13a, 13b being guided in same circumferential direction with all circumferential tracks 12 being arranged in parallel to each other. The ceiling unit exhibits three (first) drive units 11a, 11b, 11c, wherein two of the drive units 11, 11c comprise suspension elements 13 with a first orientation, and the drive unit 11b in the middle exhibits suspension elements with mirror-inverted orientation. The crawler type ceiling unit 10 exhibits at least one motor 11.5 (not shown here) interacting with at least one of the circumferential tracks 12. The crawler type ceiling unit 10 also exhibits an energy storage unit (also not depicted) providing energy to a/the at least one motor of the crawler type ceiling unit 10. As can be seen in Fig. 2b, the exemplary crawler type ceiling unit 10 also exhibits electrical contacts 13.4 to connect to a power line 1.3 in the structure 1. The power line can be AC or DC, and additionally provide for a communication bus, i.e., powerline communication. To improve safety and electromagnetic shielding of the crawler type ceiling unit 10, the crawler type ceiling unit 10 in **Fig. 2c** exhibits a protective casing 14.

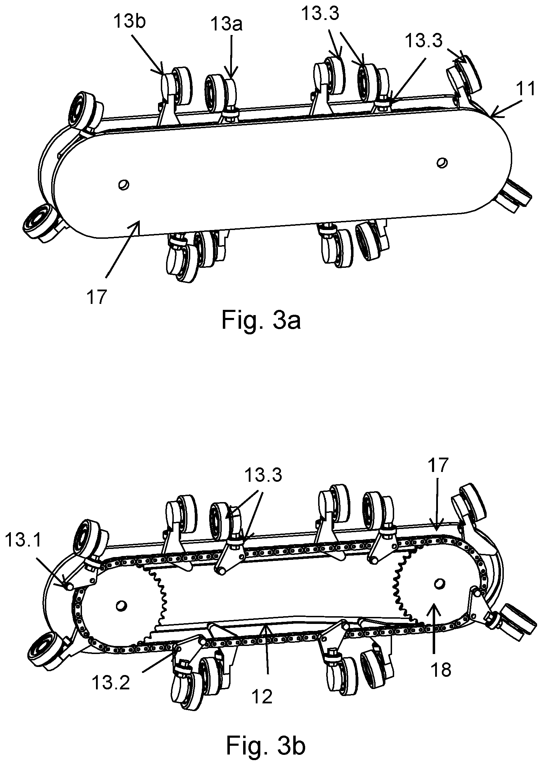

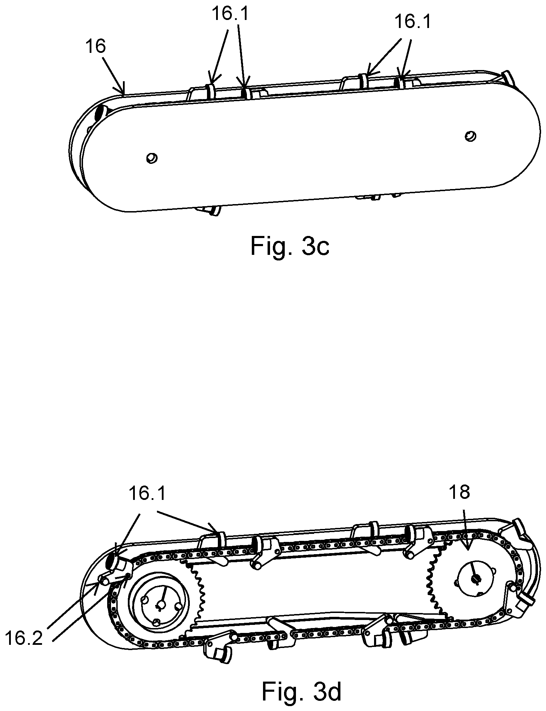

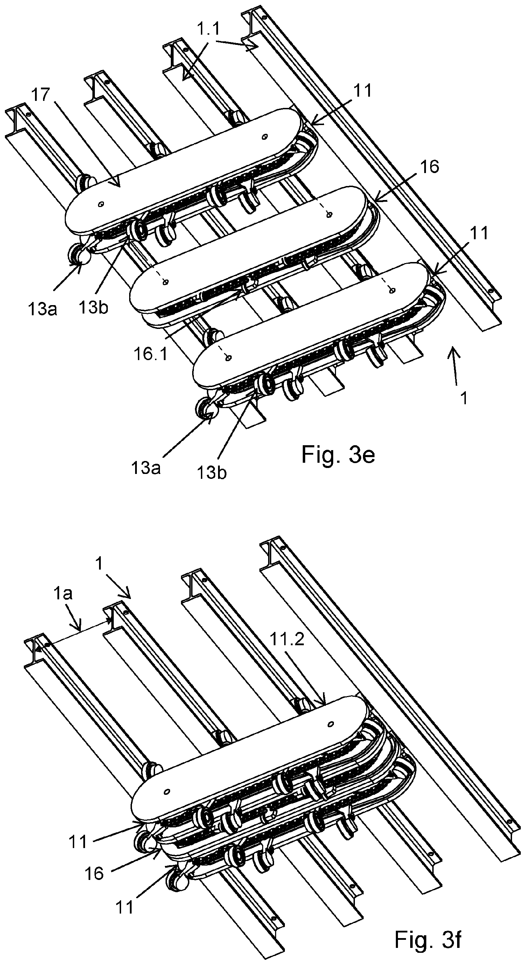

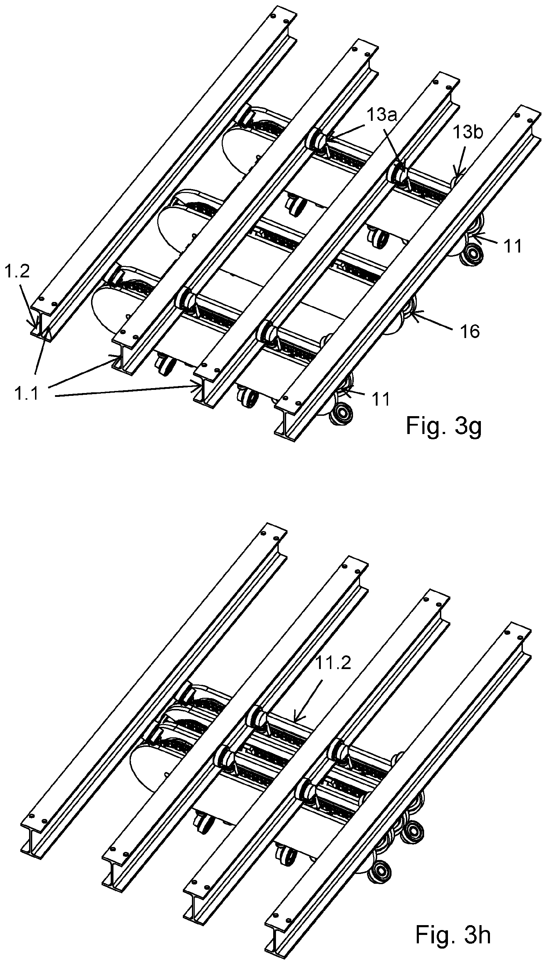

The (first) drive unit 11 shown in **Fig. 3a** exhibits suspension elements 13, 13b of the kind described in Fig. 1a, 1b but without the electrical contacts. The electrical contacts being hidden in the remaining figures is for easier interpretation and clarity only. A first set of suspension elements 13 is facing in a first direction, while a second set of suspension elements 13b is facing in a second direction, opposite to the first direction. The (first) drive unit 11 comprises two circumferential tracks 12a, 12b for each set of suspension elements 13, 13b (i.e., in total four circumferential tracks), as described with respect to Fig. 2d-2m. The second housing 17 exhibiting the two circumferential tracks 12a, 12b for the second set of suspension elements 13b is hidden in **Fig. 3b** to show how the suspension elements 13, 13b can be connected to a common chain 15a (e.g., via pulleys 13.1 of both sets of suspension elements 13, 13b) which can be driven by a gear unit 18 connected to a motor 11.5. **Fig. 3c** and **Fig. 3d** show a further unit 16 (counter unit) guiding counter wheels 16.1 for also contacting profile units 1.1 from a "bottom" side with the same shape as the first drive unit 11. The counter wheels 16.1 alone cannot suspend/fix the crawler type ceiling unit 10. The counter wheels 16.1 only serve as a counter mechanism to push against the structure 1 to increase the force coupling between the suspension elements 13 and the structure 1. The counter wheels 16.1 also exhibit pulleys 16.2 via which they are pulled along two circumferential tracks to follow a predefined motion. Two (first) drive units 11 exhibiting two sets of suspension elements 13a, 13b respectively being arranged mirror-inverted to grasp a profile unit 1.1 from two sides, as well as two sets of counter wheels 16.1, are shown in **Fig. 3e** and **Fig. 3f****.** The drive units from Fig. 3e and 3f are shown from a diagonally above perspective in **Fig. 3g** and **Fig. 3h****.** The drive units 11 are connected to form a (first) drive arrangement 11.2 comprising two (first) drive units 11 and a counter unit 16. The drive arrangement 11.2 can be driven via a common shaft connected to the gear units 18 of the drive units 11 and counter unit 16 as shown in Fig. 3b and Fig. 3d. The mirror-inverted set of suspension element 13b is hidden behind the profile unit 1.1 in Fig. 3g and 3h. It is preferred to always have at least one set of mirror-inverted suspension elements 13b in order to enhance coupling security with the structure 1.

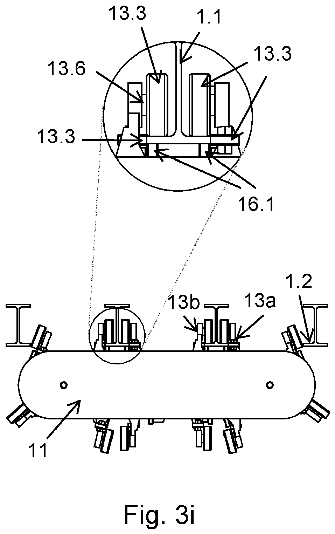

In addition to the two elements of motion 13.3 at the free ends of the suspension elements 13, 13b which couple the crawler type ceiling unit 10 to the structure 1 from the "top" side of the wheel tread of the profile units 1.1 as well as from the side of the wheel tread 1.2, which is not necessarily as thin as shown in the figures, but can also be wider in order to build the elements of motion 13.3 connecting to the side of the wheel tread bigger to allow for heavier loads to be lifted by a crawler type ceiling unit 10, especially in structures 1 being arranged at a wall. In **Fig. 3i****,** a side view of a (first) drive unit 11 of a crawler type ceiling unit 10 coupled via a subset of suspension elements 13, 13b to the structure 1 is shown. In total, six wheels 13.3, 16.1 clamp the "T"-shaped profile unit 1.1 such that slip is minimized.

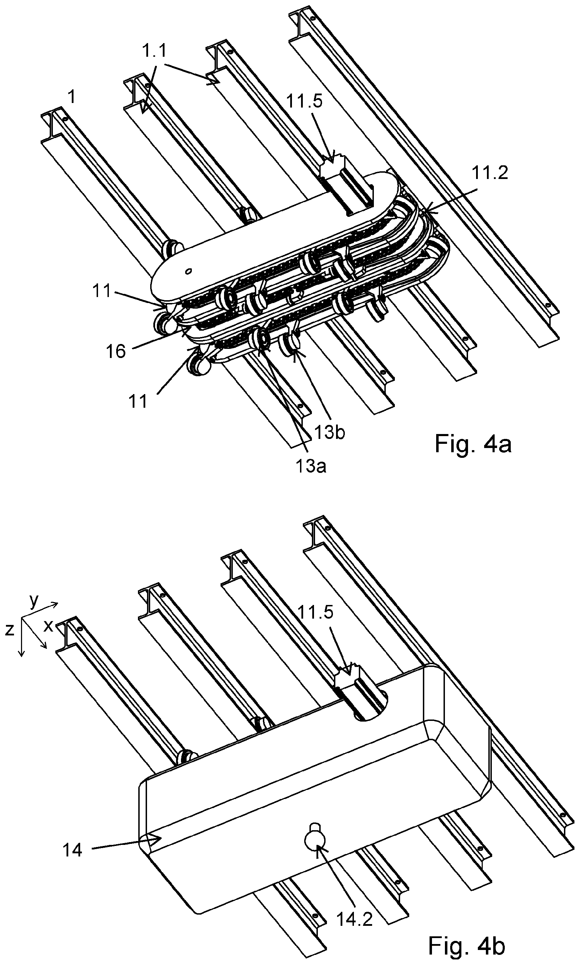

The (first) drive units 11 from Fig. 3e and Fig. 3f form a first drive arrangement with a common motor 11.5 in **Fig. 4a****.** To enhance protection (for and from the surroundings) an additional casing 14 is shown in **Fig. 4b****.** The casing 14 exhibits a ball 14.2 of a ball joint 14.1 in the centre of the drive arrangement (both in first (x) and second (y) direction). The (first) drive units 11a, 11b of the first drive arrangement 11.2 may need some flexibility even though they are very close together in order to follow curved profile units 1.1. A short splined shaft with a universal joint (not shown) can exemplarily be used to account for the small changes in angle between the (first) drive units 11 (of one first drive arrangement) when the ceiling unit 10 is following curved profile units 1.1 (in first spatial direction (x)).

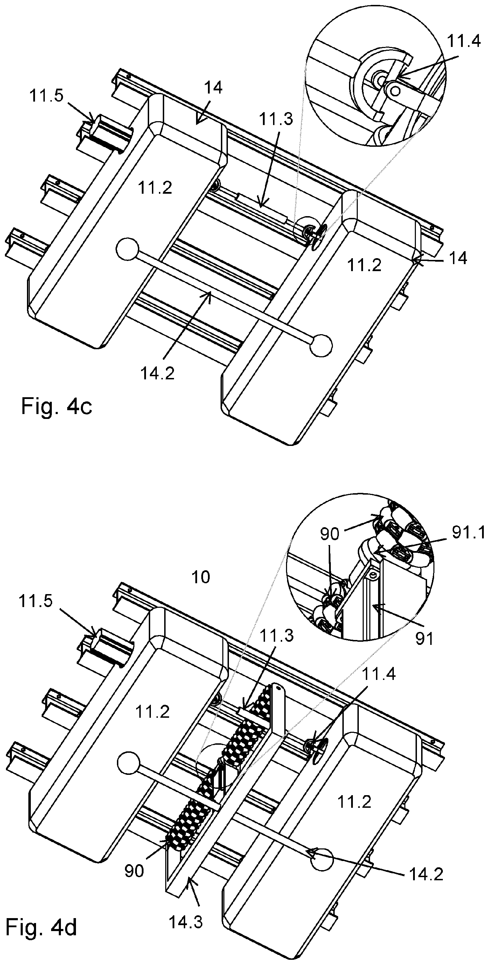

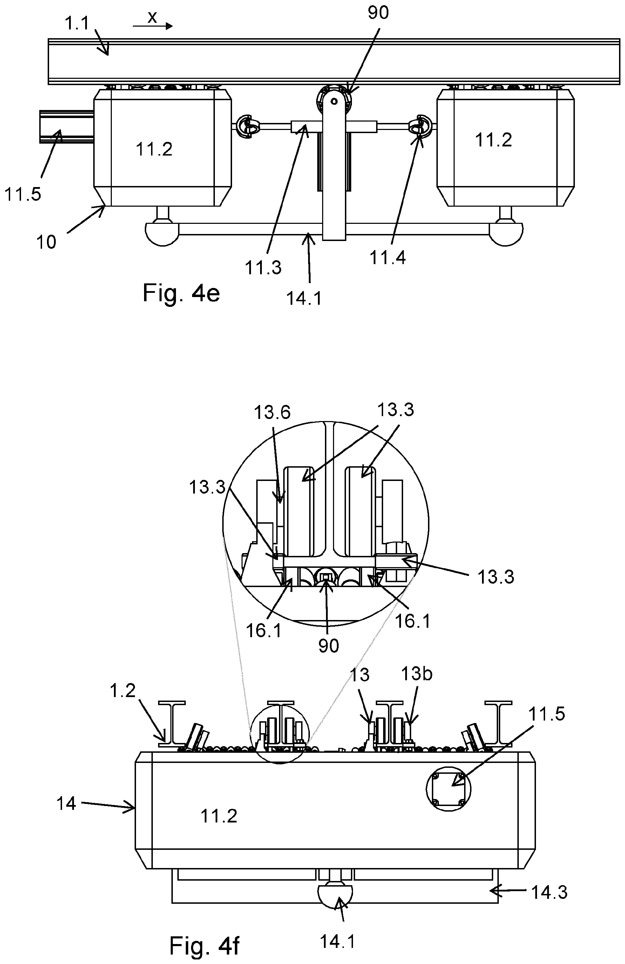

**Fig. 4c** shows a crawler type ceiling unit 10 according to one embodiment. The crawler type ceiling unit 10 exhibits two arrangements 11.2 of the type shown in **Fig. 4b****.** It is however also possible to only use one (first) drive unit 11 for each of the arrangements 11.2. The two casings 14 of the arrangements 11.2 are coupled via a ball joint 14.1. The ball joint 14.1 preferably connects to a framework 14.3 of the ceiling unit 10 as shown in **Fig. 4d****.** The (first) drive units 11 of the two drive arrangements 11.2 are connected via a drive mechanism 11.1 comprising a splined shaft 11.3 with universal joints 11.4, a close-up view of which can be found in **Fig. 4c****.** Additionally, two holonomic wheelsets 90 are shown in Fig. 4d. A motor 91 engages in a differential 91.1 connected to the holonomic wheelsets 90. The motor 91 and the holonomic wheels 90 are connected to the ceiling unit framework 14.3 in the middle between the two drive arrangements 11.2. **Fig. 4e** shows the crawler type ceiling unit 10 from a side-view perspective (from the second spatial direction). **Fig. 4f** shows the suspension elements 13, 13b of the crawler type ceiling unit 10 clamping the profile unit 1.1. The holonomic wheelsets 90 can be pressed against the profile units 1.1 from the bottom side (side facing the ceiling unit) with an additional return mechanism 90.1 not shown here.

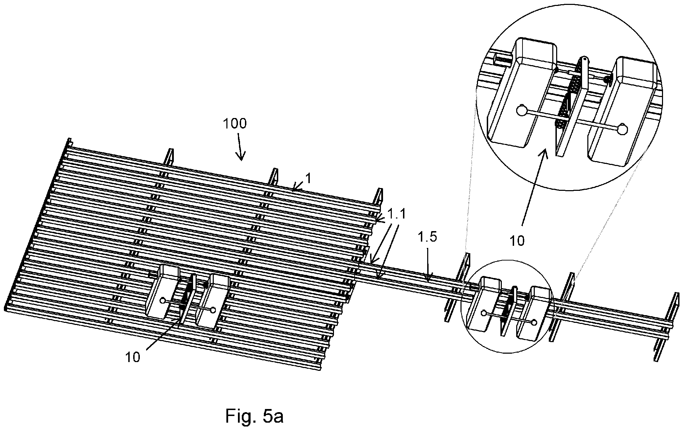

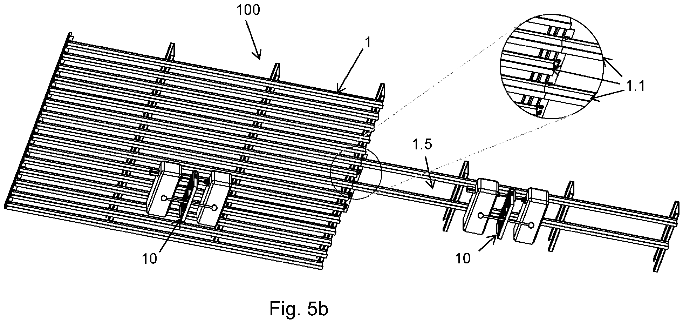

**Fig. 5a** shows a first suspension arrangement 100 according to an embodiment. The suspension arrangement 100 comprises a structure 1 with a crawler type ceiling unit 10 suspended in the structure 1. A first conveyor/connector rail 1.5 leads out of the structure 1 e.g., to a further structure 1'. The first conveyor/connector rail 1.5 comprises two directly adjacent profile units 1.1. However, as shown in **Fig. 5b****,** a second conveyor/connector rail 1.5 comprises two profile units 1.1 further spaced apart. As long as the ceiling unit is wide enough to be coupled into both of the at least two profile units of the conveyor/connector rail 1.5 when driving along the conveyor/connector rail 1.5, the profile unit can be spaced apart any integer multiple of the pitch of the structural regularity 1a. Using profile units 1.1 further spaced apart for the conveyor/connector rail 1.5 can increase the stability of the crawler type ceiling unit 10 when driving along the conveyor/connector rail 1.5, especially in curved sections.

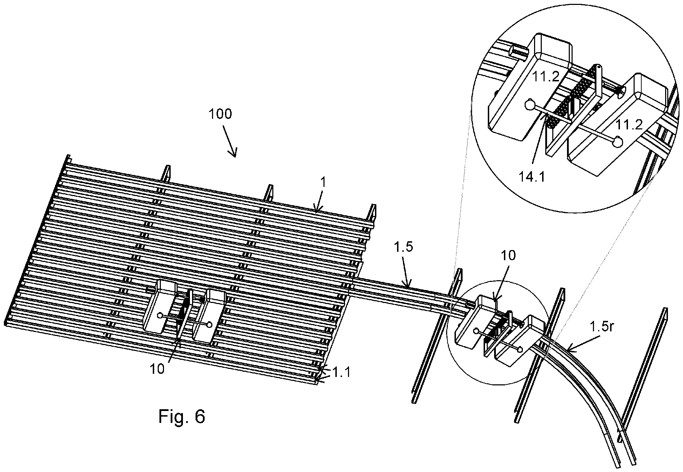

**Fig. 6** shows a further suspension arrangement 100 comprising a structure 1 and a crawler type ceiling unit 10 of the kind described in Fig. 4d to Fig. 4f. A conveyor/connector rail 1.5 describing a curve 1.5r leads out of the structure 1. A crawler type ceiling unit 10 driving along the curve 1.5r is also shown in a close-up view. The crawler type ceiling unit 10 is able to follow the curved conveyor/connector rail 1.5 due to the (first) drive units 11 (resp. the drive arrangements 11.2) being able to deviate from their original parallel orientation because of the ball joint 14.1 connecting the at least two (first) drive units (here connecting the casings 14 of the drive arrangements 11.2 comprising multiple drive units 11a, 11b and possibly also a counter unit 16).

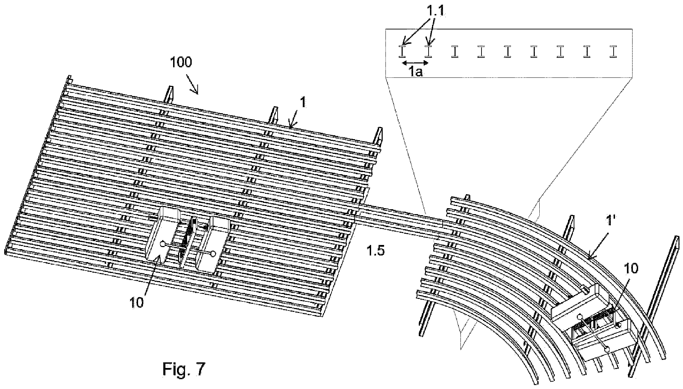

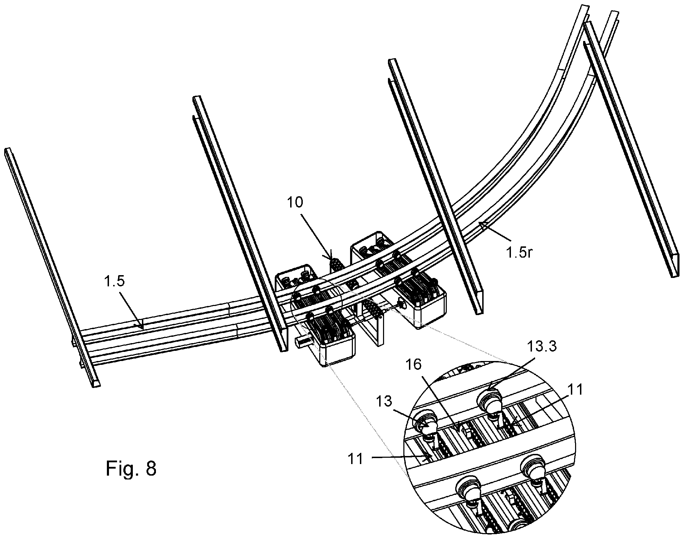

In **Fig. 7****,** a suspension arrangement 100 according to a further embodiment is shown. The suspension arrangement 100 comprises two structures 1, 1', wherein one of the structures 1' comprises curved profile units 1.1, a conveyor/connector rail 1.5 and two crawler type ceiling units 10. The profile units 1.1 must follow a continuous curve, essentially without kinks. As indicated by the close-up view of a cross-section of the structure 1 exhibiting curved profile units 1.1, the profile units always have to exhibit the structural regularity 1a in second spatial direction (y) (depending on orientation of the first spatial direction (x), essentially always orthogonal to the first spatial direction (x)) such that a coupling as shown in Fig. 3i is always ensured. Thus, the crawler type ceiling unit 10 is able to move (or to be moved) in the first spatial direction (x) (right or left along the curved profile units) irrespective of momentary motion in second spatial direction (y). Of course, the orientation between the at least two drive units 11 (of the first kind) changes depending on the position of the ceiling unit in the structure 1' exhibiting the curved profile units 1.1, i.e., the farther out (with respect to the radius of the curve) the ceiling unit 10 is in the structure 1, the smaller is the angle between the orientations of the drive units (of the first kind). The details of a crawler type ceiling unit 10 following a curved conveyor/connector rail 1.5r is shown in **Fig. 8** from a perspective view from diagonally above. The suspension elements 13 engage in the same manner with the profile units 1.1 as in Fig. 7 in the structure exhibiting the curved profile units 1.1. The suspension elements 13 of the (first) drive units 11 couple to the profile units 1.1 via the elements of motion 13.3 (preferably first wheel and side wheel (see Fig. 3i), preferably from both sides of the profile unit 1.1 via mirror-inverted suspension elements 13 not shown here).

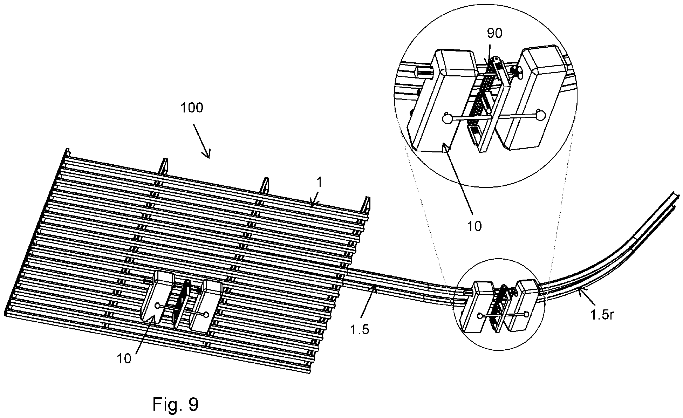

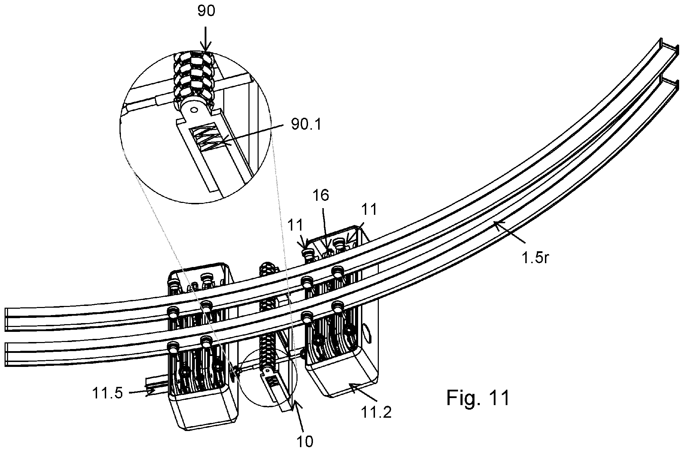

In **Fig. 9****,** a further suspension arrangement 100 is shown, wherein the suspension arrangement 100 comprises a structure 1, two crawler type ceiling units 10 and a conveyor/connector rail 1.5 leading out of the structure 1. The conveyor/connector rail 1.5 (from the perspective of the (x, y)-plane described by the structure 1) leads upwards on a curve 1.5r out of the plane defined by the structure 1. In this configuration, it is important to ensure good (force fit) coupling between the crawler type ceiling units 10 and the structure 1 or conveyor/connector rails 1.5. As indicated in the close-up view, the crawler type ceiling unit 10 exhibits a return mechanism 90.1 connected to the ceiling unit framework 14.3 and the holonomic wheelsets 90. In **Fig. 11****,** the crawler type ceiling unit going upwards on the conveyor/connector rail 1.5 is shown in a perspective view from diagonally above. A close-up view further shows the return mechanism 90.1 applying a force onto the two holonomic wheelsets 90. The ball joints 14.1 of the crawler type ceiling unit 10 allow for the (first) drive units 11 to be tilted with respect to each other in any direction, i.e., not only left-right, but also up-down thus allowing the crawler type ceiling unit 10 to follow parallel profile units 1.1 going upwards/downwards, left/right as well as any combination thereof.

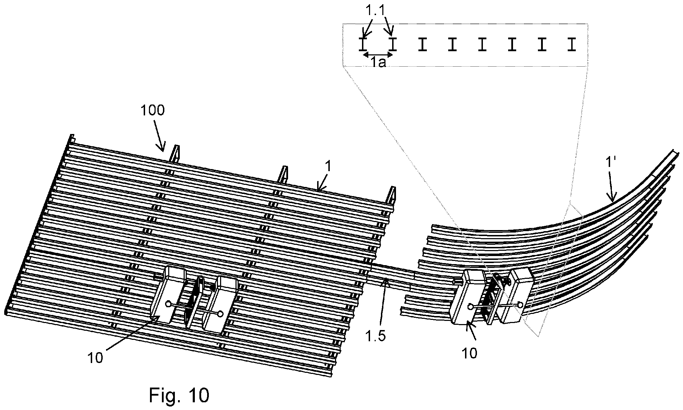

**Fig. 10** shows a further suspension arrangement 100 according to an embodiment. The suspension arrangement 100 exhibits two structures 1, 1' connected via a conveyor/connector rail 1.5 and two crawler type ceiling units 10. One of the structures 1' exhibits curved profile units 1.1 describing a segment of a tube-like shape. As indicated in the cross-section here, the profile units 1.1 define the same structural regularity 1a in the second spatial direction (y) as before (see Fig. 3i). Thus, the crawler type ceiling unit 10 is able to move (or to be moved) in the first spatial direction (x) (upwards or downwards the curved profile units) irrespective of momentary motion in second spatial direction (y).

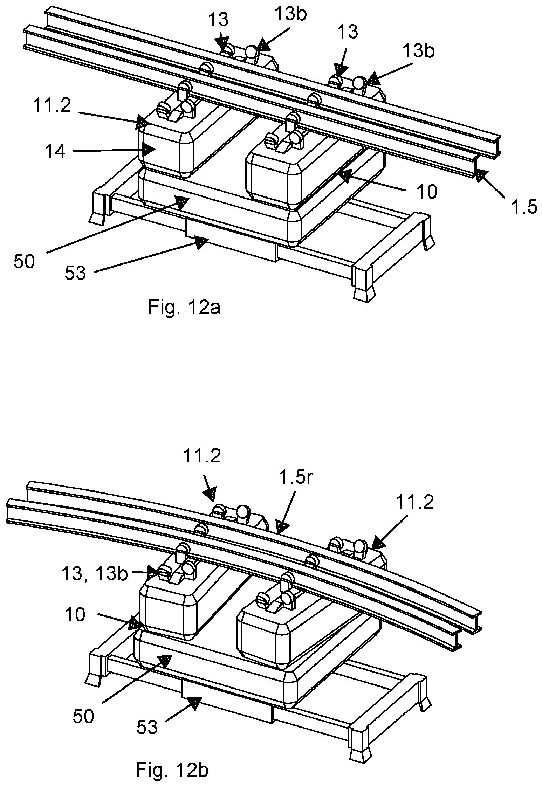

**Fig. 12a** shows a crawler type ceiling unit 10 suspended in a conveyor/connector rail 1.5, wherein the ceiling unit 10 further exhibits a hoist unit 50 and a gripping unit 53. The ceiling unit 10 comprises two (first) drive arrangements 11.2 each comprising at least one drive unit 11, preferably with at least two sets of suspension elements 13, 13b with mirror-inverted orientation with respect to each other. The drive arrangements 11.2 and the hoist unit 50 exhibit a casing 14. In **Fig. 12b****,** the crawler type ceiling unit 10 is suspended in a curve 1.5r of a conveyor/connector rail 1.5.

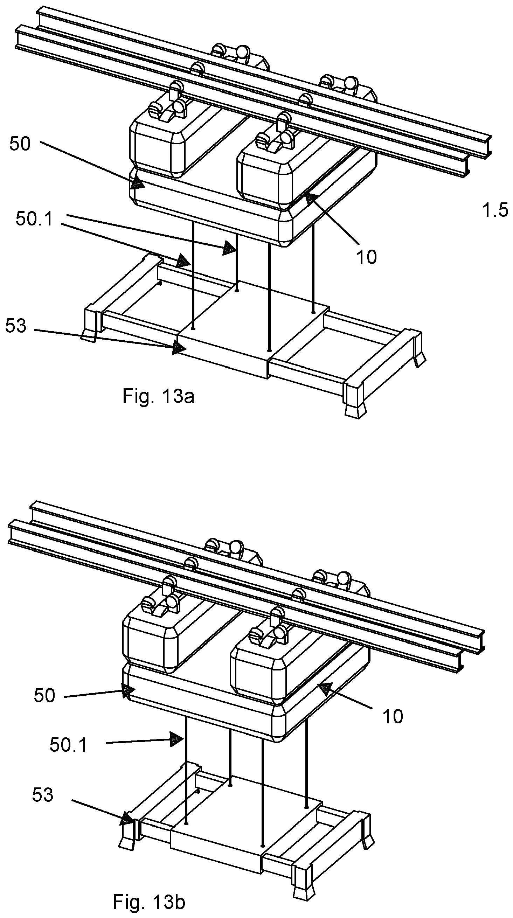

In **Fig. 13a****,** a ceiling unit 10 is shown wherein the gripping unit 53 is lowered via ropes 50.1 of the hoist unit 50. The gripping unit 53 has a first size fit for a predefined size of a container 60. The crawler type ceiling unit 10 in **Fig. 13b** exhibits a second gripping unit 53 with a different size for a different container 60 of a second predefined size. The invention will now be described first in general for the inventive concept with reference to all drawings, before the drawings are described in detail.

The examples depicted in Figs. 1 to 13b refer to embodiments, wherein the ceiling units are designed as crawler type ceiling units.

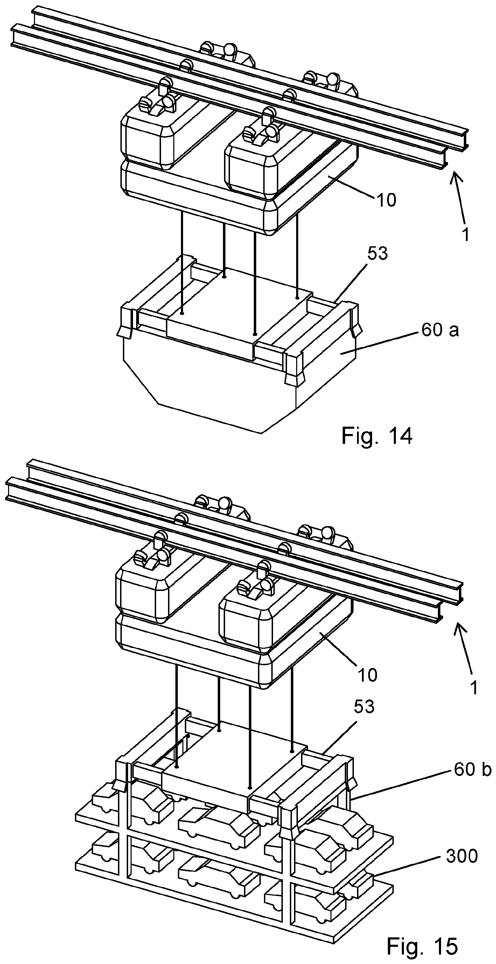

The examples according to Figs. 14, 15, 16, 17, 18, 19 refer to an integration of suspended ceiling units in embodiments of described automatable container handling systems general. However, it is preferred to integrate crawler type ceiling units as described Figs. 1 to 13b as ceiling units in the embodiments according to Figs. 14, 15, 16, 17, 18, 19.

The ceiling units can exhibit at least one motor/actuator for actively driving the ceiling unit along the structure.

Preferably each ceiling unit follows an intended direction resp. an intended path of motion, especially in conjunction with appropriate sensor-actor-arrangements.

The suspension structure can exhibit at least one energy charging point/position/area, wherein the suspension structure is configured for charging/providing the at least one ceiling unit with energy when being arranged in/at said energy charging point/position/area. For example, the charging area covers at least one charging section or the whole structure.

By arranging a suspension arrangement that comprises at least one ceiling unit and a structure extending in at least two spatial directions, wherein the structure comprises a plurality of profile units extending in a first spatial direction, wherein the structure defines in at least a part of its surface at least one structural regularity in a second spatial direction; and wherein the at structure comprises a plurality of suspension elements configured for suspending the at least ceiling unit, wherein the at least one ceiling unit comprises at least one ceiling unit, wherein the at least one ceiling unit comprises a gripping unit, wherein the gripping unit is configured to connect to at least one container; and wherein the suspension arrangement is configured for active motion of the ceiling unit in said first spatial direction and/or said second spatial direction for lifting, transferring and lowering the containers parallel to at least one transfer area for the containers in an appropriate distance from the adjacent side of stored items the items can be flexibly stored and retrieved.

It is especially useful to use at least two ceiling units which can operate independently, especially move independently.

The described embodiments of the invention can be adapted to items to be stored with predefined upper and/or lower boundaries for their weight and/or size as well to handle stored items that can have different sizes, shapes and weights. The size and configuration of the ceiling arrangement and its components for lifting, transferring and lowering the items is partly predefined, especially by the dimension and strengths of profiles implemented in the structure. Other parts of the ceiling arrangement can be modified more easily, for example by connecting ceiling units with gripping units which are adapted to the items to be stored into the storing arrangement and/or retrieved from the storing arrangement Furthermore, the number of ceiling units connected to the suspension structure can be modified.

The ceiling units can especially be operated by using at least one route planning tool for route planning along the at least one structure.

Exemplarily, the at least one ceiling unit can exhibit a sensing device exhibiting at least one sensor from the following group: speed sensor, distance sensor, height and position measuring sensor, force sensor, acceleration sensor resp. gyroscope.

The automatable container handling system, especially the route planning tool, is configured for transmitting commands to a communication unit of the at least one ceiling unit, especially to the communication units of all ceiling units individually, such that control units of the ceiling units control their respective ceiling unit based on received commands as well as based on momentary measuring data of at least sensor.

The communication unit can be configured for wireless communication at least within the automatable container handling system, wherein the (respective) ceiling unit or the suspension structure provides energy to the communication unit, especially such that the communication unit of the ceiling unit is energetically self-sustaining (autarkic) for at least a period of several days or weeks or month.

The automatable container handling system can be configured for localizing individual ceiling units based on at least one locating signal transmitted by individual ceiling units (passively or actively, e.g., passively based on at least one individual transmitter, especially based on individual identification features). Additionally, the ceiling units transmit sensor data and information about destination handling positions to the at least one route planning tool when a request to do so is received in the communication unit of the ceiling unit.

Each of the depicted embodiments can be combined with a route-planning tool that plans a path for at least one ceiling unit connected to at least one gripping unit along at least one structure from one handling position to another, especially taking into account at least momentary positions and paths of at least one other ceiling unit, especially all ceiling units also coupled to the at least one structure, wherein the ceiling unit moves omnidirectionally along the at least one structure, especially allowing for (fast) passing maneuvers. This increases the number of transportations between handling positions.

For operating the automatable container handling system, a computer implemented method for route-planning for an automatable container handling system, , is provided, the method comprising the following steps:
- receiving in a route-planning tool a request to plan a path from a starting handling position to a destination handling position from a ceiling unit or a group of synchronized ceiling units,
- obtaining and verifying position information of at least one other ceiling unit by sending a request to the at least one other ceiling unit, receiving a current position, and comparing the current position with the predicted positions of the ceiling units, wherein the prediction takes into account momentary positions and/or measured data of the ceiling units, and a planned route for the ceiling units,
- planning the path for the ceiling unit or the group of synchronized ceiling units from the starting handling position to the destination handling position by solving an optimization problem, minimizing the traveling time taking into account path length, potential wait time of each path, and predicted positions of other ceiling units to avoid collisions.

Figures 14, 15, 16, 17 show a part of a ceiling suspension arrangement 100 for lifting, transferring and lowering containers 60, 60a, 60b, 60d, comprising at least one crawler type ceiling unit 10 especially designed as previously described in Figs. 13a and 13b in detail and a ceiling structure 1 extending in at least two spatial directions x, y, wherein the ceiling structure 1 comprises a plurality of profile units 1.1 extending in a first spatial direction x, wherein the ceiling structure 1 defines in at least an area at least one structural regularity 1a in a second spatial direction y; and wherein the at least one crawler type ceiling unit 10 comprises a plurality of suspension elements 13, 13a, 13b configured for suspending the at least one crawler type ceiling unit 10 and configured for coupling the at least one crawler type ceiling unit 10 to the ceiling structure 1 by means of de-/coupling kinematics during a motion of the at least one crawler type ceiling unit 10 in said second spatial direction y, particularly depending on a relative motion of the at least one crawler type ceiling unit 10 with respect to the ceiling structure 1 in at least said second spatial direction y, especially with the crawler type ceiling unit 10 being configured to be moved in said first spatial direction x along the profile units 1.1 irrespective of momentary motion in said second spatial direction y; and wherein the at least one ceiling unit 10 comprises at least one hoist unit 50, wherein the at least one hoist unit 50 comprises a gripping unit 53, wherein the gripping unit 53 is configured to connect and/or to be connected to at least one container 60.

The container transported and/or lifted which is shown in Fig. 14 is an air-freight container 60a. This container is lifted transported and/or lifted by a ceiling unit 10 as the ceiling unit 10 is capable of transporting and/or lifting containers of different sizes and with different requirements.

The container transported and/or lifted which is shown in Fig. 15 is a car-transport container 60b capable of transporting multiple cars 300. This container is lifted transported and/or lifted by a ceiling unit 10 as the ceiling unit 10 is capable of transporting and/or lifting containers of different sizes and with different requirements.

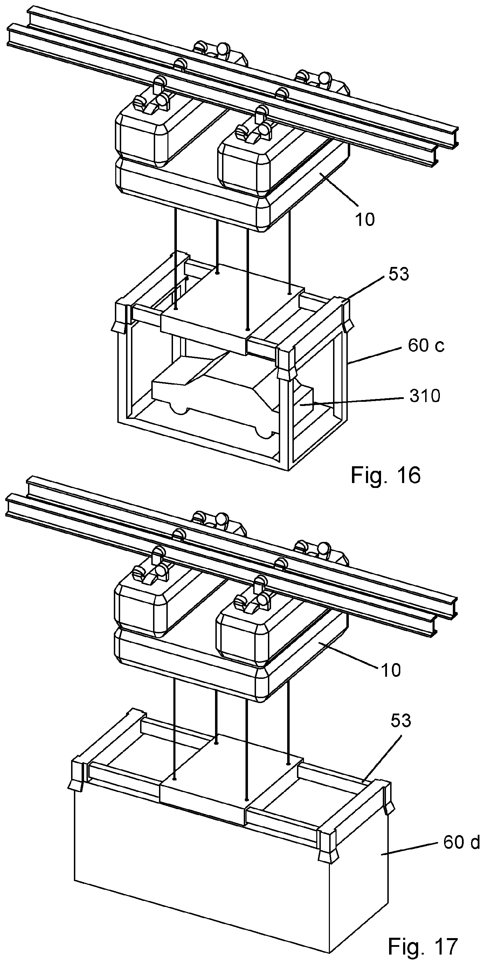

The container transported and/or lifted which is shown in Fig. 16 is a car-transport container 60c capable of transporting a car 310. This container is lifted transported and/or lifted by a ceiling unit 10 as the ceiling unit 10 is capable of transporting and/or lifting containers of different sizes and with different requirements.

The container transported and/or lifted which is shown in Fig. 17 is a standard ISO container 60d capable of transporting a variety of items according to the requirements for handling these items, e.g., cooling. This container is lifted transported and/or lifted by a ceiling unit 10 as the ceiling unit 10 is capable of transporting and/or lifting containers of different sizes and with different requirements.

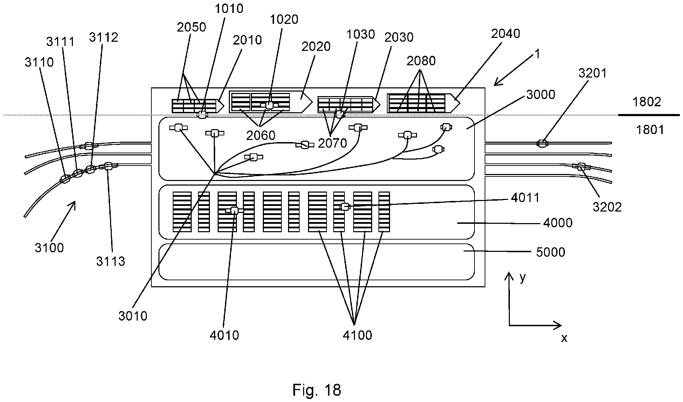

Figure 18 shows a ceiling suspension arrangement with a ceiling structure 1 extending in at least two spatial directions x, y, wherein the ceiling structure 1 comprises a plurality of profile units extending in a first spatial direction x, wherein the ceiling structure 1 defines in at least an area at least one structural regularity in a second spatial direction y as depicted before.

The at least one crawler type ceiling unit 1010, 1020, 1030, 3010,, 3110, 3111, 3112, 3201, 3202, 4010, 4011 comprises a plurality of suspension elements, especially as described before, configured for suspending the at least one crawler type ceiling unit 1010, 1020, 1030, 3010,, 3110, 3111, 3112, 3201, 3202, 4010, 4011, and configured for coupling the at least one crawler type ceiling unit 1010, 1020, 1030, 3010,, 3110, 3111, 3112, 3201, 3202, 4010, 4011 to the ceiling structure 1 by means of de-/coupling kinematics during a motion of the at least one crawler type ceiling unit 1010, 1020, 1030, 3010,, 3110, 3111, 3112, 3201, 3202, 4010, 4011 in said second spatial direction y, particularly depending on a relative motion of the at least one crawler type ceiling unit 1010, 1020, 1030, 3010,, 3110, 3111, 3112, 3201, 3202, 4010, 4011 with respect to the ceiling structure 1 in at least said second spatial direction y, especially with the crawler type ceiling unit 1010, 1020, 1030, 3010,, 3110, 3111, 3112, 3201, 3202, 4010, 4011 being configured to be moved in said first spatial direction x along the profile units irrespective of momentary motion in said second spatial direction y; and wherein the at least one ceiling unit 1010, 1020, 1030, 3010,, 3110, 3111, 3112, 3201, 3202, 4010, 4011 comprises at least one hoist unit, wherein the at least one hoist unit comprises a gripping unit, wherein the gripping unit is configured to connect and/or to be connected to at least one container.

As described beforehand, the at least one crawler type ceiling unit 1010, 1020, 1030, 3010, 3110, 3111, 3112, 3201, 3202, 4010, 4011 each can handle, especially lift and transport different containers. The ceiling units 1010, 1020, 1030, 3010, 3110, 3111, 3112, 3201, 3202, 4010, 4011 can be identical or may be designed different with regard to the containers to be handled.

The gripping unit is configured to connect and/or to be connected to at least one container. To handle different types of containers, different gripping units can be implemented. It is especially useful to connect the ceiling unit to the gripping unit by a connecting means that, comprises a coupling section for easy coupling and decoupling, especially for changing / removing the gripping unit.

The ceiling suspension arrangement comprises a tracking system, wherein the at least one crawler type ceiling unit 1010, 1020, 1030, 3010, 3110, 3111, 3112, 3201, 3202, 4010, 4011 and/or the ceiling structure 1 comprises a tracking unit; and/or wherein the at least one crawler type ceiling unit 1010, 1020, 1030, 3010, 3110, 3111, 3112, 3201, 3202, 4010, 4011 comprises at least one sensor from the following group: speed sensor, distance sensor, position measuring sensor, force sensor, acceleration sensor.

The ceiling suspension arrangement described in Fig. 8 comprises at least one control unit, wherein the at least one control unit is characterized in at least one of the following, particularly based on corresponding sensor data:
- providing for trajectory planning and/or collision avoidance,
- computing actuator signals for the ceiling units 10, particularly to follow a predefined trajectory, and/or to execute driven/driving motion according to a collision avoidance strategy,
- computing actuator signals for the gripping and hoisting motion of the at least one crawler type ceiling unit 10,
- comprising a wireless communication module to provide actuator signals to at least one crawler type ceiling unit 10.

It is especially useful if the ceiling suspension arrangement comprises a supporting structure for the ceiling structure 1.

Preferably, the at least one hoist unit of the at least one crawler type ceiling unit 1010, 1020, 1030, 3010, 3110, 3111, 3112, 32010, 3202, 4010, 4011 is configured to lift, transfer and lower a container arrangement of at least two containers, wherein the at least two containers are arranged in a side-by-side and/or superimposed manner.

In another preferred mode, the ceiling suspension arrangement comprises at least two crawler type ceiling units 1010, 1020, 1030, 3010, 3110, 3111, 3112, 32010, 3202, 4010, 4011, wherein at least two of the at least two crawler type ceiling units 1010, 1020, 1030, 3010, 3110, 3111, 3112, 32010, 3202, 4010, 4011are configured to lift, transfer and lower a container or an arrangement of at least two containers, wherein the at least two containers are arranged in a side-by-side and/or superimposed manner, wherein the gripping units of the at least two crawler type ceiling units 1010, 1020, 1030, 3010, 3110, 3111, 3112, 32010, 3202, 4010, 4011 connect to the container or the arrangement of the at least two the containers at least at two different gripping points.

The ceiling suspension arrangement shown in Figure 18 can be installed according to requirements of a logistics system. It can be arranged above ships 2010, 2020, 2030, 2040 on a seaside 1802, above logistics entities on a landside 1801, e.g. constituting a transfer area 3000 of an overland transport system, above a container storage area 4000 or above a truck/train loading area 5000.

To allow for enhanced flexibility it is preferred, that at least a part of the ceiling structure 1 is arranged at a height, which is above the height of a container transport ceiling unit and/or container stack and/or freight-carrying ceiling unit.

It is especially preferred to modify or create a container port comprising at least one ceiling suspension arrangement according to any preceding claim, wherein the at least one ceiling suspension arrangement is configured to load and/or unload at least one container transport ceiling unit and/or transfer containers to freight-carrying ceiling units and/or uninterruptedly transfer containers to a storage yard and/or uninterruptedly transfer at least one container from at least a first container transport ceiling unit to at least a second container transport ceiling unit.

In an advanced embodiment the ceiling suspension arrangement is enabled for a flexible transport of ceiling units 1010, 1020, 1030, 3010, 3110, 3111, 3112, 32010, 3202, 4010, 4011 to/from and between the ships, 2010, 2020, 2030, 2040, the transfer area 3000, the container storage area 4000 or above the truck/train loading area 5000 especially along transport paths.

In particular, Figure 18 shows a snapshot of a process for operating the container port. This snapshot shows ceiling units 1010, 1020, 1030, which move items to/from ships ceiling units 3010 which move containers to from and within the transfer area 3000 of the overland transport system, ceiling units 3010, 3110, 3111, 3112, 3113 3201, 3202, currently moving along the overland transport system, wherein the ceiling units 3010, 3110, 3111, 3112, 3113 are arranged as a train 3100 with virtual drawbars.

The ceiling units 4010, 4011 store containers to the container storage area 4000 and/or retrieve containers from the container storage area 4000. In the container storage area 4000 the containers are preferably stored as container stacks 4100.

The embodiments shown here are merely examples of the present invention and should not be construed as limiting. Alternative embodiments considered by those skilled in the art are equally encompassed within the scope of the present invention.

### List of reference signs:

1, 1' structure
1a structural regularity or raster defined by the ceiling structure
1.1 profile unit, especially T-profile resp. T-rail
1.2 wheel tread
1.3 power rail
1.5 conveyor/connector rail
1.5r curve
10 crawler type ceiling unit
11 drive unit, especially chain drive
11.1 drive mechanism
11.2 drive arrangement
11.3 shaft, especially splined shaft
11.4 universal joint
11a first drive
11b further (second) drive
11c further (third) drive
12 circumferential track
12a first circumferential track, especially comprising a chain
12b second circumferential track
12p parallel section / linear section of the track
12r redirection section / curved section of the track
13 suspension element resp. chain element
13a first suspension element resp. chain element (first type)
13b further suspension element (second type, especially mirror-inverted)
13.1 first pulley
13.2 second pulley
13.3 wheel
13.4 first electrical contact, especially current collector resp. power-slider (conductive slider for energy transfer)
13.5 lever arm
13.6 protruding section / suspension arm
13.7 second electrical contact
13.8 wire
14 casing
14.1 ball joint
14.2 ball
14.3 ceiling unit framework
15 longitudinal connecting element, especially chain element
15a closed loop of interrelated suspension elements, especially chain
16 counter unit
16.1 counter wheel
16.2 pulley
16a counter wheel chain
17 housing
18 gear unit
20 de-/coupling kinematics
50 hoist unit
53 gripping unit
60 container
60 a air-freight container
90 holonomic wheelset
90.1 return mechanism
91 motor
91.1 differential
100 ceiling suspension arrangement
1010, 1020, 1030, 3010, 3110, 3111, 3112, 32010, 3202, 4010, 4011 crawler type ceiling unit
1801 landside
1802 seaside
2010, 2020, 2030, 2040 ships
3000 transfer area
4000 storage area
4100 container stacks
5000 truck/train loading area
G13.1 first guiding point or axis (coupling the first track and the suspension element)
G13.2 second guiding point or axis (coupling the second track and the suspension element)
P10 energy charging point/position
P13 contacting/bearing point/area of the suspension element with the ceiling structure
XZa shape/contour of the first circumferential track
XZb shape/contour of the second circumferential track
y12a predefined first longitudinal positions
y12b predefined second longitudinal positions
y13 longitudinal extension of lever arm
x first spatial direction: direction of longitudinal extension of profile units
y second spatial direction: longitudinal direction resp. alignment of the circumferential tracks
z third spatial direction, especially vertical direction

## Claims

1. Ceiling suspension arrangement (100) for lifting, transferring and lowering containers (60) comprising at least one crawler type ceiling unit (10) and a ceiling structure (1) extending in at least two spatial directions (x, y), wherein the ceiling structure (1) comprises a plurality of profile units (1.1) extending in a first spatial direction (x), wherein the ceiling structure (1) defines in at least an area at least one structural regularity (1a) in a second spatial direction (y); and wherein the at least one crawler type ceiling unit (10) comprises a plurality of suspension elements (13, 13a, 13b) configured for suspending the at least one crawler type ceiling unit (10) and configured for coupling the at least one crawler type ceiling unit (10) to the ceiling structure (1) by means of de-/coupling kinematics during a motion of the at least one crawler type ceiling unit (10) in said second spatial direction (y), particularly depending on a relative motion of the at least one crawler type ceiling unit (10) with respect to the ceiling structure (1) in at least said second spatial direction (y), especially with the crawler type ceiling unit (10) being configured to be moved in said first spatial direction (x) along the profile units (1.1) irrespective of momentary motion in said second spatial direction (y); and wherein the at least one ceiling unit (10) comprises at least one hoist unit (50), wherein the at least one hoist unit (50) comprises a gripping unit (53), wherein the gripping unit (53) is configured to connect and/or to be connected to at least one container (60).

2. Ceiling suspension arrangement (100) according to claim 1, wherein the crawler type ceiling unit (10) comprises at least two circumferential tracks (12, 12a, 12b), wherein the suspension elements (13, 13a, 13b) are attached to the circumferential tracks (12, 12a, 12b) at predefined longitudinal positions corresponding to the structural regularity, wherein the circumferential tracks respectively define a specific path of circumferential motion of the respective suspension elements (13, 13a, 13b), thereby providing decoupling kinematics during a motion of the crawler type ceiling unit in said second spatial direction (y).

3. Ceiling suspension arrangement according to claim 2, wherein the at least one crawler type ceiling unit (10) comprises:
- at least one first drive unit (11) configured for circumferential motion and accommodating the at least two circumferential tracks (12a, 12b), wherein the at least two circumferential tracks comprise at least a first circumferential track (12a) and a second circumferential track (12b) having a different circumferential shape/contour than the first circumferential track, wherein the at least one crawler type ceiling unit (10) is configured for moving in said second spatial direction (y) by decoupling a subset of the plurality of suspension elements (13) from resp. coupling them into the ceiling structure (1) when the suspension elements (13) are guided along the two circumferential tracks (12a, 12b) by the circumferential motion,
- at least one second drive unit (90) configured for enabling locomotion of the crawler type ceiling unit (10) in at least said first spatial direction (x) and said second spatial direction (y), wherein the at least one second drive unit (90) is configured for locomotion of the crawler type ceiling unit (10) in said first spatial direction (x) providing for at least two-dimensional locomotion capability of the crawler type ceiling unit (10), wherein the respective suspension element (13) exhibits at least one wheel (13.3), which is arranged and configured for being guided along the ceiling structure (1) , especially on a wheel tread (1.2) of a respective/corresponding profile unit (1.1) of the ceiling structure (1),
- at least two individually controllable motors (11.5, 91), wherein the at least one first drive unit (11) and the at least one second drive unit (90) is connected to at least one motor (11.5, 91), and wherein the motors (11.5, 91) for the first drive unit(s) and the second drive unit(s) are different, providing for active two-dimensional traveling capability of the crawler type ceiling unit (10).

4. Ceiling suspension arrangement (100) according to any preceding claim, wherein the at least one crawler type ceiling unit (10) comprises at least one (further) drive unit, wherein the at least one further drive unit is configured for at least one of the following functions:
- lifting, holding and/or lowering at least one container (60) with the at least one hoist unit (50) during a stop and/or movement of the at least one crawler type ceiling unit (10) in at least said first spatial direction (x) and/or said second spatial direction (y),
- connecting the at least one gripping unit (53) of the at least one ceiling unit (10) to the at least one container (60).

5. Ceiling suspension arrangement (100) according to any preceding claim, wherein the ceiling suspension arrangement (100) comprises at least one sensing device comprising at least one sensor, wherein the at least one sensing device is configured to provide sensor data related to at least one of the following:
- motion of the at least one crawler type ceiling unit (10) in said first spatial direction (x) and/or second spatial direction (y),
- hoisting operation of the at least one hoist unit (50),
- gripping operation of the at least one gripping unit (60).

6. Ceiling suspension arrangement (100) according to any preceding claim comprising a tracking system, wherein the at least one crawler type ceiling unit (10) and/or the ceiling structure (1) comprises a tracking unit; and/or wherein the at least one crawler type ceiling unit (10) comprises at least one sensor from the following group: speed sensor, distance sensor, position measuring sensor, force sensor, acceleration sensor.

7. Ceiling suspension arrangement (100) according to any preceding claim, wherein the system comprises at least one control unit, wherein the at least one control unit is **characterized in** at least one of the following, particularly based on corresponding sensor data:
- providing for trajectory planning and/or collision avoidance,
- computing actuator signals for the ceiling units (10), particularly to follow a predefined trajectory, and/or to execute driven/driving motion according to a collision avoidance strategy,
- computing actuator signals for the gripping and hoisting motion of the at least one crawler type ceiling unit (10),
- comprising a wireless communication module to provide actuator signals to at least one crawler type ceiling unit (10).

8. Ceiling suspension arrangement according to any preceding claim, wherein the ceiling suspension arrangement (100) comprises a supporting structure for the ceiling structure (1).

9. Ceiling suspension arrangement according to any preceding claim, wherein the at least one hoist unit (50) of the at least one crawler type ceiling unit (10) is configured to lift, transfer and lower a container arrangement of at least two containers (60), wherein the at least two containers (60) are arranged in a side-by-side and/or superimposed manner.

10. Ceiling suspension arrangement (100) according to any preceding claim, wherein the ceiling suspension arrangement (100) comprises at least two crawler type ceiling units (10), wherein at least two of the at least two crawler type ceiling units (10) are configured to lift, transfer and lower a container (60) or an arrangement of at least two containers (60), wherein the at least two containers (60)are arranged in a side-by-side and/or superimposed manner, wherein the gripping units (53) of the at least two crawler type ceiling units (10) connect to the container (60) or the arrangement of the at least two containers (60) at least at two different gripping points (P53).

11. Ceiling suspension arrangement (100) according to any preceding claim, wherein at least a part of the ceiling structure (1) is arranged at a height, which is above the height of a container transport ceiling unit and/or container stack and/or freight-carrying ceiling unit.

12. Ceiling suspension arrangement (100) according to any preceding claim, wherein the at least one gripping unit (53) comprises a mechanism for connecting at least semi-autonomous to at least one container (60); and/or wherein the at least one hoist unit (50) comprises a connector unit for connecting the at least one gripping unit (53) with the at least one container (60) in an at least semi-autonomous manner.

13. Container port comprising at least one ceiling suspension arrangement (100) according to any preceding claim, wherein the at least one ceiling suspension arrangement (100) is configured to load and/or unload at least one container transport ceiling unit and/or transfer containers (60) to freight-carrying ceiling units and/or uninterruptedly transfer containers (60) to a storage yard and/or uninterruptedly transfer at least one container (60) from at least a first container transport ceiling unit to at least a second container transport ceiling unit.

14. Method of container loading and unloading with a ceiling suspension arrangement (100) according to claim 1 to 12, particularly in a container port according to claim 13, comprising at least one, particularly all, of the following steps:
- positioning of at least one crawler type ceiling unit (10) at a predefined position,
- lowering at least one gripping unit (53) of at least one hoist unit (50) of at least one crawler type ceiling unit (10),
- connecting at least one gripping unit (53) of at least one hoist unit (50) of at least one crawler type ceiling unit (10) to at least one container (60),
- lifting at least one container (60) via at least one hoist unit (50) of at least one crawler type ceiling unit (10),
- transferring at least one container (60) via a motion of at least one crawler type ceiling unit (10) in at least one spatial direction,
- lowering at least one container (60) via at least one hoist unit (50) of at least one crawler type ceiling unit (10).

15. Method of operating a ceiling suspension arrangement (100) according to claim 1 to 12, particularly in a container port according to claim 13, comprising at least one of the following:
- monitoring a position and/or trajectory of at least one crawler type ceiling unit (10),
- trajectory planning, particularly with a collision avoidance strategy,
- computing actuator signals for at least one crawler type ceiling unit (10) to follow a predefined trajectory and/or to execute driven/driving motion according to a collision avoidance strategy,
- computing actuator signals for a gripping of at least one gripping unit (53) and/or hoisting operation of at least one hoist unit (50) of at least one crawler type ceiling unit (10), particularly with an overload protection mechanism,
- coordinating a motion of at least two crawler type ceiling units (10) in at least one spatial direction, particularly via corresponding trajectory planning and/or collision avoidance strategy.
